(19) Europäisches Patentamt
European Patent Office
Office européen des brevets

(11) EP 3 098 252 A1

(12) EUROPÄISCHE PATENTANMELDUNG

(43) Veröffentlichungstag:
**30.11.2016 Patentblatt 2016/48**

(51) Int Cl.:
***C08G 65/26*** *(2006.01)*

(21) Anmeldenummer: **15169223.3**

(22) Anmeldetag: **26.05.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Covestro Deutschland AG**
**51373 Leverkusen (DE)**

(72) Erfinder:
- **Die Erfinder haben auf ihre Nennung verzichtet.**

(74) Vertreter: **Levpat**
**c/o Covestro AG**
**Gebäude 4825**
**51365 Leverkusen (DE)**

# (54) EINSATZ VON ALKOHOLEN, DIE MINDESTENS ZWEI URETHANGRUPPEN ENTHALTEN, ZUR HERSTELLUNG VON POLYETHERCARBONATPOLYOLEN

(57) Die vorliegende Erfindung betrifft ein Verfahren zur Herstellung von Polyethercarbonatpolyolen durch Anlagerung von Alkylenoxiden und Kohlendioxid an H-funktionelle Starterverbindungen, dadurch gekennzeichnet, dass mindestens ein Alkohol, der mindestens zwei Urethangruppen enthält, als H-funktionelle Starterverbindung eingesetzt wird. Weitere Gegenstände der Erfindung sind die Polyethercarbonatpolyole enthaltend eine Struktureinheit der Formel (IV),

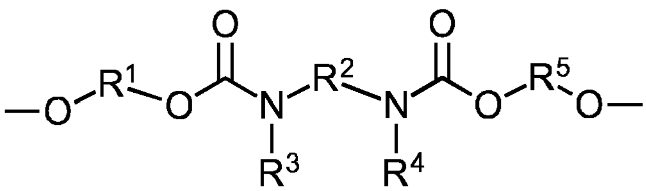

(IV)

wobei

$R^I$ bedeutet lineares oder verzweigtes $C_2$ bis $C_{24}$ - Alkylen, das gegebenenfalls durch Heteroatome wie O, S oder N unterbrochen sein kann und substituiert sein kann, bevorzugt $CH_2$-$CH_2$ oder $CH_2$-$CH(CH_3)$,

$R^2$ bedeutet lineares oder verzweigtes $C_2$ bis $C_{24}$ - Alkylen, $C_3$ bis $C_{24}$ - Cycloalkylen, $C_4$ bis $C_{24}$ - Arylen, $C_5$ bis $C_{24}$ - Aralkylen, $C_2$ bis $C_{24}$ - Alkenylen, $C_2$ bis $C_{24}$ - Alkinylen, die jeweils gegebenenfalls durch Heteroatome wie O, S oder N unterbrochen sein können und/oder jeweils mit Alkyl, Aryl und/oder Hydroxyl substituiert sein können, bevorzugt $C_2$ bis $C_{24}$ - Alkylen,

$R^3$ bedeutet H, lineares oder verzweigtes $C_1$ bis $C_{24}$ - Alkyl, $C_3$ bis $C_{24}$ - Cycloalkyl, $C_4$ bis $C_{24}$ - Aryl, $C_5$ bis $C_{24}$ - Aralkyl, $C_2$ bis $C_{24}$ - Alkenyl, $C_2$ bis $C_{24}$ - Alkinyl, die jeweils gegebenenfalls durch Heteroatome wie O, S oder N unterbrochen sein können und/oder jeweils mit Alkyl, Aryl und/oder Hydroxyl substituiert sein können, bevorzugt H,

$R^4$ bedeutet H, lineares oder verzweigtes $C_1$ bis $C_{24}$ - Alkyl, $C_3$ bis $C_{24}$ - Cycloalkyl, $C_4$ bis $C_{24}$ - Aryl, $C_5$ bis $C_{24}$ - Aralkyl, $C_2$ bis $C_{24}$ - Alkenyl, $C_2$ bis $C_{24}$ - Alkinyl, die jeweils gegebenenfalls durch Heteroatome wie O, S oder N unterbrochen sein können und/oder jeweils mit Alkyl, Aryl und/oder Hydroxyl substituiert sein können, bevorzugt H,

$R^5$ bedeutet lineares oder verzweigtes $C_2$ bis $C_{24}$ - Alkylen, das gegebenenfalls durch Heteroatome wie O, S oder N unterbrochen sein kann und substituiert sein kann, bevorzugt $CH_2$-$CH_2$ oder $CH_2$-$CH(CH_3)$,

und wobei $R^1$ bis $R^5$ identisch oder voneinander verschieden sein können, sowie die Polyethercarbonatpolyole erhältlich nach dem erfindungsgemäßen Verfahren, die Verwendung der erfindungsgemäßen Polyethercarbonatpolyole zur Herstellung eines Polyurethanpolymers sowie die resultierenden Polyurethanpolymere.

EP 3 098 252 A1

**Beschreibung**

Die vorliegende Erfindung betrifft ein Verfahren zur Herstellung von Polyethercarbonatpolyolen durch Anlagerung von Alkylenoxiden und Kohlendioxid ($CO_2$) an H-funktionelle Starterverbindungen, dadurch gekennzeichnet, dass mindestens ein Alkohol, der mindestens zwei Urethangruppen enthält, als H-funktionelle Starterverbindung eingesetzt wird. Weitere Gegenstände der Erfindung sind Polyethercarbonatpolyole enthaltend eine Urethangruppe, die Polyethercarbonatpolyole erhältlich nach dem erfindungsgemäßen Verfahren, die Verwendung der erfindungsgemäßen Polyethercarbonatpolyole zur Herstellung eines Polyurethanpolymers sowie die resultierenden Polyurethanpolymere.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f, g und h für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat, im folgenden auch als cPC bezeichnet, oder für R = H Ethylencarbonat, im folgenden auch als cEC bezeichnet).

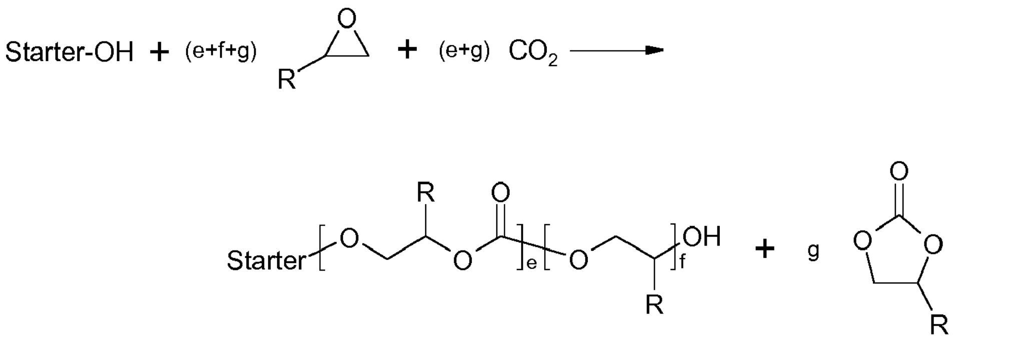

(I)

EP-A 0 222 453 offenbart ein Verfahren zur Herstellung von Polycarbonaten aus Alkylenoxiden und Kohlendioxid unter Verwendung eines Katalysatorsystems aus DMC-Katalysator und einem Co-Katalysator wie Zinksulfat. WO-A 2003/029325 offenbart ein Verfahren zur Herstellung von hochmolekularen aliphatischen Polyethercarbonatpolyolen (gewichtsmittleres Molekulargewicht größer als 30000 g/mol), bei dem ein Katalysator aus der Gruppe bestehend aus Zinkcarboxylat und Multimetallcyanidverbindung eingesetzt wird. WO-A 2008/092767 offenbart ein Verfahren zur Herstellung von Polyethercarbonatpolyolen, dadurch gekennzeichnet, dass eine oder mehrere H-funktionelle Startersubstanzen im Reaktor vorgelegt werden und dass eine oder mehrere H-funktionelle Startersubstanzen während der Reaktion kontinuierlich in den Reaktor zudosiert werden.

US 3,829,505 bzw. DE 1 595 759 beschreiben die Möglichkeit, OH-funktionelle Starterverbindungen im Überschuss mit aromatischen Polyisocyanaten umzusetzen, um auf diese Weise zu OH-Gruppen enthaltenden Polyurethanpolyolen mit mindestens 2 Urethangruppen zu gelangen, die als Starteroligomere für die DMC-Katalyse verwendet werden können.

US 3,654,224 beschreibt die Möglichkeit, Amide, inbesondere aromatische Amide wie z.B. Benzamid, als Starterverbindung für die DMC-Katalyse einzusetzen.

Die der vorliegenden Erfindung zu Grunde liegende Aufgabe bestand deshalb darin, das als Nebenprodukt anfallende cyclische Carbonat für die Herstellung von Polyethercarbonatpolyolen zu verwerten. Vorzugsweise sollen die so erhältlichen Polyethercarbonatpolyole für die Herstellung von Polyurethanen, insbesondere von Polyurethan-Weichschaumstoffen geeignet sein.

Diese Aufgabe wird erfindungsgemäß gelöst durch ein Verfahren zur Herstellung von Polyethercarbonatpolyolen durch Anlagerung von Alkylenoxiden und Kohlendioxid ($CO_2$) an H-funktionelle Starterverbindungen, dadurch gekennzeichnet, dass mindestens ein Alkohol, der mindestens zwei Urethangruppen enthält, als H-funktionelle Starterverbindung eingesetzt wird.

Bevorzugt ist das erfindungsgemäße Verfahren zur Herstellung von Polyethercarbonatpolyolen durch Anlagerung von Alkylenoxiden und Kohlendioxid ($CO_2$) an H-funktionelle Starterverbindungen dadurch gekennzeichnet, dass

mindestens ein Alkohol, der zwei Urethangruppen enthält, als H-funktionelle Starterverbindung eingesetzt wird.

Besonders bevorzugt ist das erfindungsgemäße Verfahren zur Herstellung von Polyethercarbonatpolyolen durch Anlagerung von Alkylenoxiden und Kohlendioxid ($CO_2$) an H-funktionelle Starterverbindungen dadurch gekennzeichnet, dass mindestens ein Alkohol gemäß Formel (II) als H-funktionelle Starterverbindung eingesetzt wird,

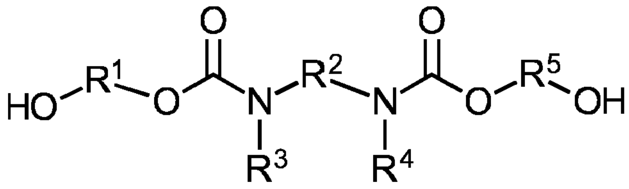

(II)

wobei

$R^1$ bedeutet lineares oder verzweigtes $C_2$ bis $C_{24}$ - Alkylen, das gegebenenfalls durch Heteroatome wie O, S oder N unterbrochen sein kann und substituiert sein kann, bevorzugt $CH_2$-$CH_2$ oder $CH_2$-$CH(CH_3)$,
$R^2$ bedeutet lineares oder verzweigtes $C_2$ bis $C_{24}$ - Alkylen, $C_3$ bis $C_{24}$ - Cycloalkylen, $C_4$ bis $C_{24}$ - Arylen, $C_5$ bis $C_{24}$ - Aralkylen, $C_2$ bis $C_{24}$ - Alkenylen, $C_2$ bis $C_{24}$ - Alkinylen, die jeweils gegebenenfalls durch Heteroatome wie O, S oder N unterbrochen sein können und/oder jeweils mit Alkyl, Aryl und/oder Hydroxyl substituiert sein können, bevorzugt $C_2$ bis $C_{24}$ - Alkylen,
$R^3$ bedeutet H, lineares oder verzweigtes $C_1$ bis $C_{24}$ - Alkyl, $C_3$ bis $C_{24}$ - Cycloalkyl, $C_4$ bis $C_{24}$ - Aryl, $C_5$ bis $C_{24}$ - Aralkyl, $C_2$ bis $C_{24}$ - Alkenyl, $C_2$ bis $C_{24}$ - Alkinyl, die jeweils gegebenenfalls durch Heteroatome wie O, S oder N unterbrochen sein können und/oder jeweils mit Alkyl, Aryl und/oder Hydroxyl substituiert sein können, bevorzugt H,
$R^4$ bedeutet H, lineares oder verzweigtes $C_1$ bis $C_{24}$ - Alkyl, $C_3$ bis $C_{24}$ - Cycloalkyl, $C_4$ bis $C_{24}$ - Aryl, $C_5$ bis $C_{24}$ - Aralkyl, $C_2$ bis $C_{24}$ - Alkenyl, $C_2$ bis $C_{24}$ - Alkinyl, die jeweils gegebenenfalls durch Heteroatome wie O, S oder N unterbrochen sein können und/oder jeweils mit Alkyl, Aryl und/oder Hydroxyl substituiert sein können, bevorzugt H,
$R^5$ bedeutet lineares oder verzweigtes $C_2$ bis $C_{24}$ - Alkylen, das gegebenenfalls durch Heteroatome wie O, S oder N unterbrochen sein kann und substituiert sein kann, bevorzugt $CH_2$-$CH_2$ oder $CH_2$-$CH(CH_3)$,

und wobei $R^1$ bis $R^5$ identisch oder voneinander verschieden sein können.

Die Verwendung des Worts *ein* im Zusammenhang mit zählbaren Größen ist hierbei und im Folgenden nur dann als Zahlwort zu verstehen, wenn dies aus dem Zusammenhang hervorgeht (bspw. durch die Formulierung "*genau ein*"). Ansonsten umfassen Ausdrücke wie "ein Alkylenoxid", "ein Alkohol, der mindestens zwei Urethangruppen enthält" etc. immer auch solche Ausführungsformen, in denen zwei oder mehr Alkylenoxide, zwei oder mehr Alkohole, die mindestens zwei Urethangruppen enthalten etc. eingesetzt werden.

Nachfolgend wird die Erfindung im Detail erläutert. Verschiedene Ausführungsformen sind dabei beliebig miteinander kombinierbar, solange sich für den Fachmann aus dem Kontext nicht eindeutig das Gegenteil ergibt.

Die Alkohole, die mindestens zwei Urethangruppen enthalten, sind erhältlich durch Umsetzung von cyclischen Carbonaten mit Verbindungen, die mindestens zwei Aminogruppen enthalten. Bevorzugt sind die Alkohole, die zwei Urethangruppen enthalten, erhältlich durch Umsetzung von Propylencarbonat und/oder Ethylencarbonat mit Verbindungen, die zwei Aminogruppen enthalten.

Die besonders bevorzugten Alkohole der Formel (II) sind erhältlich durch Umsetzung von cyclischen Carbonaten mit Diaminen gemäß Formel (III),

$$HN(R^3)\text{-}R^2\text{-}NH(R^4) \qquad \text{(III)}$$

wobei $R^2$, $R^3$ und $R^4$ die oben genannte Bedeutung haben, wobei $R^3$ und $R^4$ identisch oder voneinander verschieden sein können.

Als cyclischen Carbonate werden bevorzugt Propylencarbonat und/oder Ethylencarbonat eingesetzt.

Höchst bevorzugt sind die Alkohole der Formel (II) erhältlich durch Umsetzung von Propylencarbonat und/oder Ethylencarbonat mit Diaminen gemäß Formel (III).

Besonders bevorzugt sind die Alkohole der Formel (II) erhältlich durch Umsetzung von Propylencarbonat und/oder Ethylencarbonat mit mindestens einer Verbindung ausgewählt aus der Gruppe bestehend aus 1,2-Ethandiamin, Diaminopropan, Diaminopentan, Diaminohexan, Diaminooctan, Diaminodecan, Diaminododecan, Diaminooctadecan, Diaminoeicosan, Isophorondiamin, Toluylendiamin, und Methylendianilin.

Die Umsetzung der cyclischen Carbonate mit den Aminoalkoholen erfolgt bevorzugt bei 40 bis 80 °C, besonders bevorzugt bei 55 bis 65 °C. Die Reaktionszeit liegt bevorzugt bei 5 bis 40 h, besonders bevorzugt bei 10 bis 30 h.

In einer besonders vorteilhaften Ausführungsform wird das cyclische Carbonat im Überschuss eingesetzt.

Bevorzugt beträgt das molare Verhältnis von cyclischem Carbonat zu Aminoalkohol 1,05 bis 3, besonders bevorzugt von 1,1 bis 2, ganz besonders bevorzugt von 1,2 bis 1,6. Das überschüssige cyclische Carbonat kann entweder direkt nach der Synthese des Alkohols, der mindestens zwei Urethangruppen enthält, durch z.B. Dünnschichtverdampfung entfernt werden, oder kann im Alkohol, der mindestens zwei Urethangruppen enthält, belassen und bei der Polyethercarbonatpolyolherstellung mit eingesetzt werden. Im zweiten genannten Fall wird das überschüssige cyclische Carbonat nach der Polyethercarbonatpolyolherstellung aus dem Produkt entfernt.

Neben den Alkoholen, die mindestens zwei Urethangruppen enthalten, können im erfindungsgemäßen Verfahren zusätzlich auch H-funktionelle Starterverbindungen ohne Urethangruppen eingesetzt werden, die nachfolgend beschrieben werden. Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen. Die Fähigkeit zur Verwendung eines Starters mit einer niedrigen Molmasse ist ein deutlicher Vorteil gegenüber der Verwendung von oligomeren Startern, die mittels einer vorherigen Oxyalkylierung hergestellt sind. Insbesondere wird eine Wirtschaftlichkeit erreicht, die durch das Weglassen eines getrennten Oxyalkylierungsverfahrens ermöglicht wird.

Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionellen Startersubstanzen können auch aus der Substanzklasse der Polyetherpolyole ausgewählt sein, die ein Molekulargewicht $M_n$ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Insbesondere werden Polyetherpolyole, die nach dem hier beschriebenen erfindungsgemäßen Verfahren erhältlich sind, eingesetzt. Diese als H-funktionelle Startersubstanzen eingesetzten Polyetherpolyole werden hierzu in einem separaten Reaktionsschritt zuvor hergestellt

Die H-funktionellen Startersubstanzen können auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure,

Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanzen Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanzen eingesetzt werden.

Die H-funktionellen Startersubstanzen weisen im Allgemeinen eine Funktionalität (d.h. Anzahl an für die Polymerisation aktiven H-Atomen pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol und Polyetherpolyole mit einem Molekulargewicht Mn im Bereich von 150 bis 4500 g/mol und einer Funktionalität von 2 bis 3.

Ein weiterer Gegenstand der Erfindung sind Polyethercarbonatpolyole enthaltend eine Struktureinheit der Formel (IV),

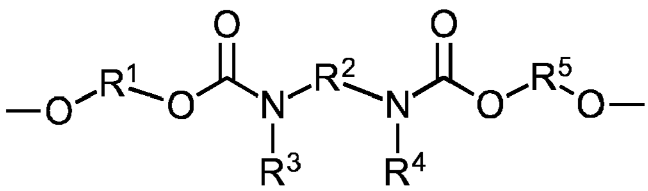

(IV)

wobei $R^1$, $R^2$, $R^3$, $R^4$ und $R^5$ die oben genannte Bedeutung haben. Vorzugsweise enthalten die erfindungsgemäßen Polyethercarbonatpolyole genau eine einzige Struktureinheit der Formel (IV) pro Polyethercarbonatpolyol-Molekül.

Die erfindungsgemäßen Polyethercarbonatpolyole weisen bevorzugt eine OH-Zahl von 3 bis 400 mg KOH /g, besonders bevorzugt 10 bis 200 mg KOH/g auf.

Des Weiteren weisen die erfindungsgemäßen Polyethercarbonatpolyole eine Funktionalität von 2,0 bis 4,0, bevorzugt von 2,05 bis 3,00 auf.

Ein weiterer Gegenstand der vorliegenden Erfindung ist ein Verfahren zur Herstellung von Polyethercarbonatpolyolen durch Anlagerung von Alkylenoxiden und Kohlendioxid an H-funktionelle Starterverbindungen, dadurch gekennzeichnet, dass mindestens ein Urethan-Alkohol gemäß Formel (II) als H-funktionelle Starterverbindung eingesetzt wird und die Anlagerung in Gegenwart mindestens eines Doppelmetallcyanid-Katalysators (auch als DMC-Katalysator bezeichnet) erfolgt.

Für das erfindungsgemäße Verfahren geeignete DMC-Katalysatoren sind im Prinzip aus dem Stand der Technik bekannt (siehe z.B. US-A-3,404,109, US-A-3,829,505, US-A-3,941,849 und US-A-5,158,922). DMC-Katalysatoren, die z. B. in US-A-5,470,813, EP-A-0 700 949, EP-A-0 743 093, EP-A-0 761 708, WO 97/40086, WO 98/16310 und WO 00/47649 beschrieben sind, besitzen eine sehr hohe Aktivität in der Polymerisation von Alkylenoxiden und ggf. der Co-Polymerisation von Alkylenoxiden mit geeigneten Co-Monomeren wie beispielsweise Lactonen, cyclischen Carbonsäureanhydriden, Lactiden, cyclischen Carbonaten oder Kohlendioxid und ermöglichen die Herstellung von polymeren Polyolen bei sehr geringen Katalysatorkonzentrationen (25 ppm oder weniger), so dass eine Abtrennung des Katalysators aus dem fertigen Produkt im Allgemeinen nicht mehr erforderlich ist. Ein typisches Beispiel sind die in EP-A-0 700 949 beschriebenen hochaktiven DMC-Katalysatoren, die neben einer Doppelmetallcyanid-Verbindung (z. B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Es ist auch möglich, die in WO 2011/144523 offenbarten alkalischen DMC-Katalysatoren einzusetzen.

Zur Herstellung der Doppelmetallcyanid-Verbindungen geeignete cyanidfreie Metallsalze besitzen bevorzugt die allgemeine Formel (V),

$$M(X)_n \qquad (V)$$

wobei
M ausgewählt ist aus den Metallkationen $Zn^{2+}$, $Fe^{2+}$, $Ni^{2+}$, $Mn^{2}$+, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X steht für ein oder mehrere (d. h.verschiedene) Anionen, vorzugsweise ein Anion ausgewählt aus der Gruppe der Halogenide (d. h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Cyanat, Thiocyanat, Isocyanat, Isothiocyanat oder Nitrat ist;
oder geeignete cyanidfreie Metallsalze besitzen die allgemeine Formel (VI),

$M_r(X)_3$ (VI)

wobei
M ausgewählt ist aus den Metallkationen $Fe^{3+}$, $Al^{3+}$ und $Cr^{3+}$,
X steht für ein oder mehrere (d. h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalate ist und
r ist 1, wenn X = Halogenid, Hydroxid, Cyanat, Thiocyanat, Isocyanat, Isothiocyanat, Carboxylat oder Nitrat ist,
oder geeignete cyanidfreie Metallsalze besitzen die allgemeine Formel (VII),

$M(X)_s$ (VII)

wobei
M ausgewählt ist aus den Metallkationen $Mo^{4+}$, $V^{4+}$ und $W^{4+}$
X steht für oder mehrere (d. h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Cyanat, Thiocyanat, Isocyanat, Isothiocyanat, Carboxylat oder Nitrat ist,
oder geeignete cyanidfreie Metallsalze besitzen die allgemeine Formel (VIII),

$M(X)_t$ (VIII)

wobei
M ausgewählt ist aus den Metallkationen $Mo^{6+}$ und $W^{6+}$
X steht für ein oder mehrere (d. h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Cyanat, Thiocyanat, Isocyanat, Isothiocyanat, Carboxylat oder Nitrat ist.
Beispiele geeigneter cyanidfreier Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen-(II)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze besitzen bevorzugt die allgemeine Formel (IX)

$(Y)_aM'(CN)_b(A)_c$ (IX)

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$, $Cs^+$) und Erdalkalimetall (d.h. $Be^{2+}$, $Ca^{2+}$, $Mg^{2+}$, $Sr^{2+}$, $Ba^{2+}$), A ausgewählt ist aus einem oder mehreren Anionen der Gruppe bestehend aus Halogeniden (d..h. Fluorid, Chlorid, Bromid, Iodid), Hydroxid, Sulfat, Carbonat, Cyanat, Thiocyanat, Isocyanat, Isothiocyanat, Carboxylat, Oxalat oder Nitrat und

a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.
Beispiele geeigneter Metallcyanidsalze sind Kaliumhexacyanocobaltat(III), Kaliumhexacyano-ferrat(II), Kaliumhexacyanoferrat(III), Calciumhexacyanocobaltat(III) und Lithiumhexacyano-cobaltat(III).
Bevorzugte Doppelmetallcyanid-Verbindungen, die in den DMC-Katalysatoren enthalten sind, sind Verbindungen der allgemeinen Formel (X)

$$M_X[M'_{X'}(CN)_y]_Z \qquad (X),$$

worin M wie in Formel (V) bis (VIII) und
M' wie in Formel (IX) definiert ist, und
x, x', y und z sind ganzzahlig und so gewählt, dass die Elektronenneutralität der Doppelmetallcyanidverbindung gegeben ist.
Vorzugsweise ist
x=3, x'=1, y=6 und z=2,
M = Zn(II), Fe(II), Co(II) oder Ni(II) und
M' = Co(III), Fe(III), Cr(III) oder Ir(III).
Beispiele geeigneter Doppelmetallcyanidverbindungen sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US-A 5158922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US-A-5,158,922 (siehe insbesondere Spalte 6, Zeilen 9 bis 65), US-A-3,404,109, US-A-3,829,505, US-A-3,941,849, EP-A-0 700 949, EP-A-0 761 708, JP-A-4145123, US-A-5470813, EP-A-0 743 093 und WO-A-97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z. B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol, 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha$,$\beta$-ungesättigten Carbonsäureester oder ionische oberflächen- bzw. grenzflächenaktiven Verbindungen eingesetzt.

Bevorzugt werden bei der Herstellung der DMC-Katalysatoren im **ersten Schritt** die wässrigen Lösungen des Metallsalzes (z. B. Zinkchlorid), eingesetzt im stöchiometrischen Überschuss (mindestens 50 Mol-%) bezogen auf Metallcyanidsalz, (also mindestens ein molares Verhältnis von cyanidfreiem Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, so dass sich eine Suspension bildet, die die Doppelmetallcyanid-Verbindung (z.B. Zinkhexacyanocobaltat), Wasser, überschüssiges cyanidfreies Metallsalz, und den organischen Komplexliganden enthält. Der organische Komplexligand kann dabei in der wässrigen Lösung des cyanidfreien Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des cyanidfreien Metallsalzes und des Metallcyanidsalzes und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d. h. der Herstellung

der Suspension) erfolgt unter Einsatz einer Mischdüse, besonders bevorzugt unter Einsatz eines Strahldispergators wie in WO-A-01/39883 beschrieben.

Im **zweiten Schritt** erfolgt die Isolierung des Feststoffs (d. h. die Vorstufe des erfindungsgemäßen Katalysators) aus der Suspension durch bekannte Techniken, wie Zentrifugation oder Filtration.

In einer bevorzugten Ausführungsvariante zur Herstellung des Katalysators wird der isolierte Feststoff anschließend in einem **dritten Verfahrensschritt** mit einer wässrigen Lösung des organischen Komplexliganden gewaschen (z. B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Hierzu kann z.B. der erste Waschvorgang wiederholt werden. Bevorzugt ist es aber, für weitere Waschvorgänge nicht wässrige Lösungen zu verwenden, z.B. eine Mischung aus organischem Komplexliganden und weiterer komplexbildender Komponente.

Der isolierte und gegebenenfalls gewaschene Feststoff wird anschließend, gegebenenfalls nach Pulverisierung, bei Temperaturen von im allgemeinen 20 - 100 °C und bei Drücken von im allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A-01/80994 beschrieben.

Die Konzentration an eingesetztem DMC-Katalysator beträgt 10 ppm bis 10000 ppm, bevorzugt 20 ppm bis 5000 ppm und besonders bevorzugt 50 ppm bis 500 ppm, bezogen auf die Masse des herzustellenden Polyethercarbonatpolyols. Je nach Anforderungsprofil der nachgeschalteten Anwendung kann der DMC-Katalysator im Produkt belassen oder (teilweise) abgetrennt werden Die (teilweise) Abtrennung des DMC-Katalysators kann beispielsweise durch Behandlung mit Adsorbentien erfolgen. Verfahren zur Abtrennung von DMC-Katalysatoren sind beispielsweise beschrieben in US-A-4,987,271, DE-A-3132258, EP-A-0 406 440, US-A-5,391,722, US-A-5,099,075, US-A-4,721,818, US-A-4,877,906 und EP-A-0 385 619.

Für das erfindungsgemäße Verfahrens geeignete Alkylenoxide haben 2 bis 24 Kohlenstoffatome. Bei den Alkylenoxiden mit 2 bis 24 Kohlenstoffatomen handelt es sich bevorzugt um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach Alkylenoxidierte Fette als Mono-, Di- und Triglyceride, Alkylenoxidierte Fettsäuren, $C_1$-$C_{24}$-Ester von Alkylenoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, sowie Alkylenoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan und 3-Glycidyloxypropyltriisopropoxysilan. Bevorzugt wird als Alkylenoxid wenigstens ein Akylenoxid ausgewählt aus der Gruppe bestehend aus Ethylenoxid und Propylenoxid eingesetzt.

Weitere mit Alkylenoxiden und Kohlendioxid nach dem erfindungsgemäßen Verfahrens unter DMC-Katalyse gemeinsam polymerisierbare Monomere sind alle Sauerstoffhaltigen cyclischen Verbindungen, insbesondere Lactone, Lactide, aliphatische und aromatische cyclische Carbonsäureanhydride und cyclische Carbonate. Ihre Verwendung wird beschrieben in US-A-3,538,043, US-A-4,500,704, US-A-5,032,671, US-A-6,646,100, EP-A-0 222 453 und WO-A-2008/013731.

Im Folgenden werden mehrere Varianten zur Durchführung des erfindungsgemäßen Verfahrens zur Herstellung von Polyethercarbonatpolyolen durch Anlagerung von Alkylenoxiden und Kohlendioxid an H-funktionelle Starterverbindungen, dadurch gekennzeichnet, dass mindestens ein Urethan-Alkohol, der mindestens zwei Urethangruppen enthält, vorzugsweise ein Urethan-Alkohol gemäß Formel (II) als H-funktionelle Starterverbindung eingesetzt wird, detailliert beschrieben. Die Darstellung ist lediglich beispielhaft und nicht als die vorliegende Erfindung beschränkend zu verstehen.

Beispielsweise ist das erfindungsgemäße Verfahren dadurch gekennzeichnet, dass

(α) der Urethan-Alkohol, der mindestens zwei Urethangruppen enthält, vorzugsweise ein Urethan-Alkohol gemäß Formel (II) oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei DMC-Katalysator dem Urethan-Alkohol, der mindestens zwei Urethangruppen enthält, vorzugsweise dem Urethan-Alkohol gemäß Formel (II) oder dem Suspensionsmittel vor oder nach der Trocknung zugesetzt wird,

(β) zur Aktivierung eine Teilmenge (bezogen auf die Gesamtmenge der bei der Aktivierung und Copolymerisation eingesetzten Menge an Alkylenoxiden) von Alkylenoxid zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,

(γ) Alkylenoxid, Kohlendioxid und gegebenenfalls Urethan-Alkohol, der mindestens zwei Urethangruppen enthält, zu der aus Schritt (β) resultierenden Mischung zugesetzt werden ("Copolymerisation"),

wobei wenigstens in einem der Schritte (α) oder (γ) mindestens ein Urethan-Alkohol, der mindestens zwei Urethangruppen enthält, vorzugsweise mindestens ein Urethan-Alkohol gemäß Formel (II) als H-funktionelle Startersubstanz zugesetzt wird.

Die gegebenenfalls eingesetzten Suspensionsmittel enthalten keine H-funktionellen Gruppen. Als Suspensionsmittel sind alle polar-aprotischen, schwach polar-aprotischen und unpolaraprotischen Lösungsmittel geeignet, die jeweils keine H-funktionellen Gruppen enthalten. Als Suspensionsmittel kann auch eine Mischung aus zwei oder mehrerer dieser Suspensionsmittel eingesetzt werden. Beispielhaft seien an dieser Stelle folgende polar-aprotischen Suspensionsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethy¬sulf¬oxid, Sulfolan, Dimethylformamid, Dimethylacetamid und N-Methylpyrrolidon. Zu der Gruppe der unpolar- und schwach polar-aprotischen Suspensionsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlen¬wasserstoffe, wie z.B., Chloroform, Chlorbenzol, Dichlorbenzol und Tetra¬chlor¬kohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

Zu Schritt (α): (Trocknung)

Vorzugsweise wird in Schritt (α) ein Suspensionsmittel, das keine H-funktionellen Gruppen enthält, im Reaktor gegebenenfalls gemeinsam mit DMC-Katalysator vorgelegt, und dabei wird keine H-funktionelle Startersubstanz im Reaktor vorgelegt. Alternativ können auch in Schritt (α) ein Suspensionsmittel, das keine H-funktionellen Gruppen enthält, und zusätzlich eine Teilmenge des Urethan-Alkohols, der mindestens zwei Urethangruppen enthält, vorzugsweise des Urethan-Alkohols gemäß Formel (II) sowie gegebenenfalls DMC-Katalysator im Reaktor vorgelegt werden, oder es können auch in Schritt (α) eine Teilmenge des Urethan-Alkohols, der mindestens zwei Urethangruppen enthält, vorzugsweise des Urethan-Alkohols gemäß Formel (II) sowie gegebenenfalls DMC-Katalysator im Reaktor vorgelegt werden. Weiterhin können auch in Schritt (α) die Gesamtmenge des Urethan-Alkohols, der mindestens zwei Urethangruppen enthält, vorzugsweise des Urethan-Alkohols gemäß Formel (II) sowie gegebenenfalls DMC-Katalysator im Reaktor vorgelegt werden.

In einer bevorzugten Ausführungsform wird in das resultierende Gemisch aus DMC-Katalysator mit Suspensionsmittel und/oder Urethan-Alkohol, der mindestens zwei Urethangruppen enthält, vorzugsweise ein Urethan-Alkohol gemäß Formel (II) bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird das resultierende Gemisch aus DMC-Katalysator mit Suspensionsmittel und/oder Urethan-Alkohol, der mindestens zwei Urethangruppen enthält, vorzugsweise ein Urethan-Alkohol gemäß Formel (II) bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der DMC-Katalysator kann beispielsweise in fester Form oder als Suspension in einem oder mehreren Suspensionsmittel(n) oder als Suspension in einem Urethan-Alkohol, der mindestens zwei Urethangruppen enthält, vorzugsweise in einem Urethan-Alkohol gemäß Formel (II) zugegeben werden.

In einer weiteren bevorzugten Ausführungsform wird in Schritt (α)

(α-I) Suspensionsmittel und/oder eine Teilmenge oder die Gesamtmenge an Urethan-Alkohol, der mindestens zwei Urethangruppen enthält, vorzugsweise Urethan-Alkohol gemäß Formel (II) vorgelegt und

(α-II) die Temperatur des Suspensionsmittels und/oder des Urethan-Alkohols, der mindestens zwei Urethangruppen enthält, vorzugsweise des Urethan-Alkohols gemäß Formel (II) auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der Doppelmetallcyanid-Katalysator zum Suspensionsmittel und/oder zum Urethan-Alkohol, der mindestens zwei Urethangruppen enthält, vorzugsweise Urethan-Alkohol gemäß Formel (II) in Schritt (α-I) oder unmittelbar anschließend in Schritt (α-II) zugesetzt wird, und wobei das Suspensionsmittel keine H-funktionellen Gruppen enthält.

Zu Schritt (β): (Aktivierung)

Schritt (β) dient der Aktivierung des DMC-Katalysators. Dieser Schritt kann gegebenenfalls unter Inertgasatmosphäre, unter einer Atmosphäre aus Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxid bei Temperaturen von 90 bis 150°C zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Der Verfahrensschritt der Aktivierung ist die Zeitspanne von der Zugabe der Teilmenge an Alkylenoxid, gegebenenfalls in Gegenwart von $CO_2$, zum DMC-Katalysator bis zum Auftreten der Wärmeentwicklung. Gegebenenfalls kann die Teilmenge Alkylenoxid in mehreren Einzelschritten, gegebenenfalls in Gegenwart von $CO_2$, zum DMC-Katalysator gegeben werden und dann jeweils die Zugabe des Alkylenoxids unterbrochen werden. Im diesem Fall umfasst der Verfahrensschritt der Aktivierung die Zeitspanne von der Zugabe der ersten Teilmenge an Alkylenoxid, gegebenenfalls in Gegenwart von $CO_2$, zum DMC-Katalysator bis zum Auftreten der Wärmeentwicklung nach Zugabe der letzten Teilmenge an Alkylenoxid. Im Allgemeinen kann dem Aktivierungsschritt ein Schritt zum Trocknen des DMC-Katalysators und ggf. des Urethan-Alkohols, der mindestens zwei Urethangruppen enthält, bei erhöhter Temperatur und/oder reduziertem Druck, gegebenenfalls unter Durchleiten eines Inertgases durch die Reaktionsmischung, vorgelagert sein.

Die Dosierung eines oder mehrerer Alkylenoxide (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an Suspensionsmittel und/oder Urethan-Alkohol, der mindestens zwei Urethangruppen enthält, vorzugsweise Urethan-Alkohol gemäß Formel (II)). Das Alkylenoxid kann in einem Schritt oder portionsweise in mehreren Teilmengen zugegeben werden. Bevorzugt wird nach Zugabe einer Teilmenge an Alkylenoxid die Zugabe des Alkylenoxids bis zum Auftreten der Wärmeentwicklung unterbrochen und erst dann die nächste Teilmenge an Alkylenoxid zugegeben. Bevorzugt ist auch eine zweistufige Aktivierung (Schritt β), wobei
(β1) in einer ersten Aktivierungsstufe die Zugabe einer ersten Teilmenge von Alkylenoxid unter Inertgasatmosphäre erfolgt und
(β2) in einer zweiten Aktivierungsstufe die Zugabe einer zweiten Teilmenge von Alkylenoxid unter Kohlendioxid-Atmosphäre erfolgt.

Zu Schritt (γ): (Copolymerisation)

Für das erfindungsgemäße Verfahren hat sich gezeigt, dass Schritt (γ) vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Unterhalb von 50°C läuft die Reaktion unter Bildung eines Polyethercarbonatpolyols nur sehr langsam ab. Bei Temperaturen oberhalb von 150°C steigt die Menge an unerwünschten Nebenprodukten stark an.

Die Dosierung eines oder mehrerer Alkylenoxide und des Kohlendioxids kann simultan, wechselweise oder sequentiell erfolgen, wobei die gesamte Kohlendioxidmenge auf einmal oder dosiert über die Reaktionszeit zugegeben werden kann. Es ist möglich, während der Zugabe des Alkylenoxids den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung eines oder mehrerer Alkylenoxide erfolgt simultan, wechselweise oder sequentiell zur Kohlendioxid Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden. Die Dosierung der Alkylenoxide kann simultan, wechselweise oder sequentiell über jeweils separate Dosierungen (Zugaben) erfolgen oder über eine oder mehrere Dosierungen, wobei die Alkylenoxide einzeln oder als Gemisch dosiert werden können. Über die Art und/oder Reihenfolge der Dosierung der Alkylenoxide und/oder des Kohlendioxids ist es möglich, statistische, alternierende, blockartige oder gradientenartige Polyethercarbonatpolyole zu syn¬thetisieren.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell die Alkylenoxide und das $CO_2$ verbraucht werden und ob das Produkt gegebenenfalls $CO_2$-freie Polyether-Blöcke oder Blöcke mit unterschiedlichem $CO_2$-Gehalt enthalten soll. Die Menge des Kohlendioxids (angegeben als Druck) kann bei der Zugabe der Alkylenoxide ebenso variieren. Je nach den gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Bei einem Verfahren mit Dosierung von Urethan-Alkohol, der mindestens zwei Urethangruppen enthält, vorzugsweise von Urethan-Alkohol gemäß Formel (II) in Schritt (γ) kann die Dosierung des Urethan-Alkohols, der mindestens zwei Urethangruppen enthält, vorzugsweise des Urethan-Alkohols gemäß Formel (II), eines oder mehrerer Alkylenoxid(e) und gegebenenfalls auch des Kohlendioxids simultan oder sequentiell (portionsweise) erfolgen, beispielsweise kann die gesamte Kohlendioxidmenge, die Menge an Urethan-Alkohol, der mindestens zwei Urethangruppen enthält, vorzugsweise an Urethan-Alkohol gemäß Formel (II) und/oder die in Schritt (γ) dosierte Menge an Alkylenoxiden auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, während der Zugabe des Alkylenoxids und/oder des Urethan-Alkohols, der mindestens zwei Urethangruppen enthält, vorzugsweise des Urethan-Alkohols gemäß Formel (II) den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung eines oder mehrerer Alkylenoxid(e) und/oder des Urethan-Alkohols, der mindestens zwei Urethangruppen enthält, vorzugsweise des Urethan-Alkohols gemäß Formel (II) erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden. Die Dosierung der Alkylenoxide bzw. des Urethan-Alkohols, der mindestens zwei Urethangruppen enthält, vorzugsweise des Urethan-Alkohols gemäß Formel (II) kann simultan oder sequentiell über jeweils separate Dosierungen (Zugaben) erfolgen oder über eine oder mehrere Dosierungen, wobei die Alkylenoxide bzw. der Urethan-Alkohol, der mindestens zwei Urethangruppen enthält, vorzugsweise der Urethan-Alkohol gemäß Formel (II) einzeln oder als Gemisch dosiert werden können. Über die Art und/oder Reihenfolge der Dosierung des Urethan-Alkohols, der mindestens zwei Urethangruppen enthält, vorzugsweise des Urethan-Alkohols gemäß Formel (II), der Alkylenoxide und/oder des Kohlendioxids ist es möglich, statistische, alternierende, blockartige oder gradientenartige Polyethercarbonatpolyole zu synthetisieren.

In einer bevorzugten Ausführungsform wird in Schritt (γ) die Dosierung des Urethan-Alkohols, der mindestens zwei Urethangruppen enthält, vorzugsweise des Urethan-Alkohols gemäß Formel (II) zeitlich vor der Zugabe des Alkylenoxids beendet.

Eine bevorzugte Ausführungsform des erfindungsgemäßen Verfahrens ist unter anderem dadurch gekennzeichnet, dass in Schritt (γ) die Gesamtmenge des Urethan-Alkohols, der mindestens zwei Urethangruppen enthält, vorzugsweise des Urethan-Alkohols gemäß Formel (II) zugegeben wird, also in Schritt (α) ein Suspensionsmittel eingesetzt wird. Diese Zugabe kann mit einer konstanten Dosierrate, mit einer variierenden Dosierrate oder portionsweise erfolgen.

Bevorzugt werden die Polyethercarbonatpolyole in einem kontinuierlichen Verfahren hergestellt, das sowohl eine kontinuierliche Copolymerisation als auch eine kontinuierliche Zugabe des Urethan-Alkohols, der mindestens zwei Urethangruppen enthält, vorzugsweise des Urethan-Alkohols gemäß Formel (II) umfasst. Gegenstand der Erfindung ist daher auch ein Verfahren, wobei in Schritt (γ) Urethan-Alkohol, der mindestens zwei Urethangruppen enthält, vorzugsweise Urethan-Alkohol gemäß Formel (II), Alkylenoxid sowie DMC-Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei in Schritt (γ) der DMC-Katalysator, welcher in dem Urethan-Alkohol gemäß Formel (II) suspendiert wurde, kontinuierlich zugegeben. Die Dosierung des Alkylenoxids, des Urethan-Alkohols, der mindestens zwei Urethangruppen enthält, vorzugsweise des Urethan-Alkohols gemäß Formel (II) und des DMC-Katalysators kann über separate oder gemeinsame Dosierstellen erfolgen. In einer bevorzugten Ausführungsform werden das Alkylenoxid und der Urethan-Alkohol, der mindestens zwei Urethangruppen enthält, vorzugsweise der Urethan-Alkohol gemäß Formel (II) über separate Dosierstellen kontinuierlich dem Reaktionsgemisch zugeführt. Diese Zugabe des Urethan-Alkohols, der mindestens zwei Urethangruppen enthält, vorzugsweise des Urethan-Alkohols gemäß Formel (II) kann als kontinuierliche Zudosierung in den Reaktor oder portionsweise erfolgen.

Beispielsweise wird für das kontinuierliche Verfahren zur Herstellung der Polyethercarbonatpolyole gemäß den Schritten (α) und (β) eine aktivierte DMC-Katalysator-Suspensionsmittel-Mischung hergestellt, dann werden gemäß Schritt (γ)

(γ1) jeweils eine Teilmenge an Urethan-Alkohol, der mindestens zwei Urethangruppen enthält, vorzugsweise an Urethan-Alkohol gemäß Formel (II), einem oder mehreren Alkylenoxid(en) und Kohlendioxid zudosiert zum Initiieren der Copolymerisation, und

(γ2) während des Fortschreitens der Copolymerisation jeweils die verbleibende Menge an DMC-Katalysator, Urethan-Alkohol, der mindestens zwei Urethangruppen enthält, vorzugsweise Urethan-Alkohol gemäß Formel (II) und Alky¬lenoxid(en) in Gegenwart von Kohlendioxid kontinuierlich zudosiert, wobei gleichzeitig resultierendes Reaktionsgemisch kontinuierlich aus dem Reaktor entfernt wird.

In Schritt (γ) wird der DMC-Katalysator bevorzugt suspendiert in Urethan-Alkohol, der mindestens zwei Urethangruppen enthält, vorzugsweise in Urethan-Alkohol gemäß Formel (II) zugegeben.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Die Schritte (α), (β) und (γ) können in einem Rührkessel durchgeführt werden, wobei der Rührkessel je nach Ausführungsform und Betriebsweise über den Reaktormantel, innen liegende und/oder in einem Umpumpkreislauf befindliche Kühlflächen gekühlt wird. Sowohl im Semi-batch-Verfahren, bei dem das Produkt erst nach Ende der Reaktion entnommen wird, als auch im kontinuierlichen Verfahren, bei dem das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren.

In einer bevorzugten Ausführungsform wird die gemäß den Schritten (α) und (β) resultierende aktivierte DMC-Katalysator enthaltende Mischung in demselben Reaktor weiter mit einem oder mehreren Alkylenoxid(en), Urethan-Alkohol, der mindestens zwei Urethangruppen enthält, vorzugsweise Urethan-Alkohol gemäß Formel (II) und Kohlendioxid umgesetzt. In einer weiteren bevorzugten Ausführungsform wird die gemäß den Schritten (α) und (β) resultierende aktivierte DMC-Katalysator enthaltende Mischung in einem anderen Reaktionsbehältnis (beispielsweise einem Rührkessel, Rohrreaktor oder Schlaufenreaktor) weiter mit Alkylenoxiden, einer oder mehreren Startersubstanz(en) und Kohlendioxid umgesetzt.

Bei Reaktionsführung in einem Rohrreaktor wird die gemäß den Schritten (α) und (β) resultierende aktivierte DMC-Katalysator enthaltende Mischung, ein Urethan-Alkohol, der mindestens zwei Urethangruppen enthält, vorzugsweise ein Urethan-Alkohol gemäß Formel (II), ein oder mehrere Alkylenoxid(e) und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Durchführung der Schritte (α), (β) und (γ) verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Vorzugsweise werden die Schritte (α) und (β) in einem ersten Reaktor durchgeführt, und das resultierende Reaktionsgemisch dann in einen zweiten Reaktor für die Copolymerisation gemäß Schritt (γ) überführt. Es ist aber auch möglich, die Schritte (α), (β) und (γ) in einem Reaktor durchzuführen.

Das erfindungsgemäße Verfahren kann auch so geführt werden, dass anfänglich ein gemäß den Schritten (α)

und (β) in einem Suspensionsmittel aktivierter DMC-Katalysator verwendet wird, und während der Copolymerisation (γ) der DMC-Katalysator ohne vorherige Aktivierung zugesetzt wird. Ein besonders vorteilhaftes Merkmal der bevorzugten Ausführungsform der vorliegenden Erfindung ist also die Fähigkeit zur Verwendung von "frischen" DMC-Katalysatoren ohne Aktivierung für die Teilmenge an DMC-Katalysator, der kontinuierlich im Schritt (γ) zugegeben wird. Eine analog zu Schritt (β) durchzuführende Aktivierung von DMC-Katalysatoren umfasst nicht nur zusätzliche Aufmerksamkeit der Bedienungsperson, wodurch sich die Fertigungskosten erhöhen, sondern sie erfordert auch einen Druck-Reaktionsbehälter, wodurch sich auch die Kapitalkosten beim Bau einer entsprechenden Produktionsanlage erhöhen. Hier wird "frischer" DMC-Katalysator als nicht aktivierter DMC-Katalysator in fester Form oder in Form einer Aufschlämmung in einer Star¬tersubstanz oder Suspensionsmittel definiert. Die Fähigkeit des vorliegenden Verfahrens zur Verwendung von fri¬schem, nicht aktiviertem DMC-Katalysator im Schritt (γ) ermöglicht signifikante Einsparungen bei der kommerziellen Her¬stellung von Polyethercarbonatpolyolen und ist eine bevorzugte Ausführungsform der vorliegenden Erfindung.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des DMC-Katalysators oder des Reaktanden aufrechterhalten wird. Die Katalysatorzufuhr kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Ma¬terialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reak¬tion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktant, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

Schritt (δ)

Optional kann in einem Schritt (δ) das bei der Copolymerisation resultierende Reaktionsgemisch, bevorzugt das in Schritt (γ) kontinuierlich entfernte Reaktionsgemisch, welches im allgemeinen einen Gehalt von 0,05 Gew.-% bis 10 Gew.-% Alkylenoxid enthält, in einen Nachreaktor überführt werden, in dem im Wege einer Nachreaktion der Gehalt an freiem Alkylenoxid auf weniger als 0,05 Gew.-% im Reaktionsgemisch reduziert wird. Als Nachreaktor kann beispielsweise ein Rohrreaktor, ein Schlaufenreaktor oder ein Rührkessel dienen. Bevorzugt liegt der Druck in diesem Nachreaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 50 bis 150°C und besonders bevorzugt bei 80 bis 140°C.

In dem resultierenden Polyethercarbonatpolyol kann anschließend thermisch, bevorzugt bei einer Temperatur von 80°C bis 200 °C, der Gehalt an leicht flüchtigen Bestandteilen reduziert werden. Zur thermischen Reduktion der flüchtigen Bestandteile können die dem Fachmann aus dem Stand der Technik allgemein bekannten Methoden eingesetzt werden. Beispielsweise kann die thermische Reduktion der flüchtigen Bestandteile mittels Dünnschichtverdampfung, Kurzwegverdampfung oder Fallfimverdampfung erreicht werden, wobei dies bevorzugt unter vermindertem Druck (Vakuum) erfolgt. Daneben können auch klassische Destillationsverfahren zum Einsatz kommen, bei denen das Polyethercarbonatpolyol z.B. in einem Kolben oder Rührkessel auf eine Temperatur von 80 bis 200°C erhitzt wird, und die leicht flüchtigen Bestandteile über Kopf abdestilliert werden. Zur Steigerung der Effizienz der Destillation kann dabei sowohl unter vermindertem Druck und/oder Einsatz eines inerten Strippgases (z.B. Stickstoff) und/oder Einsatz eines Schleppmittels (z.B. Wasser oder inertes organisches Lösungsmittel) gearbeitet werden. Daneben kann die Reduktion der flüchtigen Bestandteile auch durch Vakuum-Strippen in einer Packungskolonne erfolgen, wobei als Strippgas üblicherweise Wasserdampf oder Stickstoff zum Einsatz kommen.

Neben den bevorzugt eingesetzten DMC-Katalysatoren auf Basis von Zinkhexacyanocobaltat ($Zn_3[Co(CN)_6]_2$) können für das erfindungsgemäße Verfahren auch andere dem Fachmann aus dem Stand der Technik für die Copolymerisation von Epoxiden und Kohlendioxid bekannte Metallkomplexkatalysatoren auf Basis der Metalle Zink und/oder Cobalt eingesetzt werden. Dies beinhaltet insbesondere sogenannte Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284), sogenannte Cobalt-Salen-Katalysatoren (beschrieben z.B. in US 7,304,172 B2, US 2012/0165549 A1) und bimetallische Zink-Komplexe mit makrozyklischen Liganden (beschrieben

z.B. in M. R. Kember et al., Angew. Chem., Int. Ed., 2009, 48, 931).

Ein weiterer Gegenstand der vorliegenden Erfindung ist ein Polyethercarbonatpolyol erhältlich nach dem erfindungsgemäßen Verfahren.

Die OH-Zahlen der erhaltenen Polyethercarbonatpolyole weisen bevorzugt Werte von 3 mg KOH/g bis 400 mg KOH/g, besonders bevorzugt von 10 mg KOH/g bis 200 mg KOH/g, ganz besonders bevorzugt von 20 mg KOH/g bis 150 mg KOH/g, auf.

Unter Äquivalentmolmasse ist die durch die Zahl der aktiven Wasserstoffatome geteilte Gesamtmasse des aktive Wasserstoffatome enthaltenden Materials zu verstehen. Im Falle von hydroxygruppenhaltigen Materialien steht sie in folgender Beziehung zur OH-Zahl:

$$\text{Äquivalentmolmasse} = 56100 / \text{OH-Zahl [mg KOH/g]}$$

Den nach dem erfindungsgemäßen Verfahren erhältlichen Polyethercarbonatpolyolen können gegebenenfalls Alterungsschutzmittel wie z. B. Antioxidantien zugesetzt werden.

Die vorliegende Erfindung betrifft ferner die Verwendung eines erfindungsgemäßen Polyethercarbonatpolyols zur Herstellung eines Polyurethanpolymers, bevorzugt eines Polyurethan-Weichschaumstoffs, besonders bevorzugt eines Polyurethan-Weichblockschaumstoffs oder eines Polyurethan-Weichformschaumstoffs.

Ein weiterer Gegenstand der Erfindung ist ein Polyurethanpolymer, bevorzugt ein Polyurethan-Weichschaumstoff, besonders bevorzugt ein Polyurethan-Weichblockschaumstoff oder ein Polyurethan-Weichformschaumstoff, erhältlich durch Umsetzung eines Polyisocyanats mit einem erfindungsgemäßen Polyethercarbonatpolyol nach einem dem Fachmann geläufigen Verfahren unter Zuhilfenahme üblicher Additive wie beispielsweise Aktivatoren, Stabilisatoren, Treibmittel, Vernetzer, Kettenverlängerer und/oder Füllstoffen sowie ggf. weiterer Polyetherpolyole, Polyesterpolyole, Polyethercarbonatpolyole, Polycarbonatpolyole und/oder füllstoffhaltiger Polyole (Polymerpolyole, Polyharnstoffdispersionen etc.). Geeignete Polyisocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75 bis 136 beschrieben werden, beispielsweise solche der Formel (XI),

$$Q(NCO)_n, \qquad \text{(XI)}$$

in der
n = 2 - 4, vorzugsweise 2 -3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP 0 007 502 A1, Seiten 7 - 8, beschrieben werden. Bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Die urethangruppenhaltigen Polyisocyanate (Präpolymere) können beispielsweise Reaktionsprodukte der Polyisocyanate mit Polyester-Polyolen oder aber beliebigen anderen Polyolen (beispielsweise konventionellen Polyetherpolyolen) sein. Vorzugsweise wird als Polyisocyanat mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt, besonders bevorzugt wird als Polyisocyanat eine Mischung enthaltend 4,4'-Diphenylmethandiisocyanat und 2,4'-Diphenylmethandiisocyanat und Polyphenylpolymethylenpolyisocyanat eingesetzt.

Neben den vorgenannten Polyisocyanaten können für die Herstellung der Polyurethanpolymere, bevorzugt der Polyurethan-Weichschaumstoffe, besonders bevorzugt der Polyurethan-Weichblockschaumstoffe oder der Polyurethan-Weichformschaumstoffe, zusätzlich noch konventionelle Polyetherpolyole verwendet werden. Unter konventionellen Polyetherpolyolen im Sinne der Erfindung sind Verbindungen zu verstehen, die Alkylenoxidadditionsprodukte von Starterverbindungen mit Zerewitinoff-aktiven Wasserstoffatomen sind. Beispiele für solche Polyetherpolyole sind dem Fachmann bekannt. Sie können eine Hydroxylzahl gemäß DIN 53240 von $\geq$ 3,0 mg KOH/g bis $\leq$ 1000 mg KOH/g, vorzugsweise von $\geq$ 5,0 mg KOH/g bis $\leq$ 600 mg KOH/g aufweisen. Die für die Herstellung der konventionellen Polyetherpolyole eingesetzten Starterverbindungen mit Zerewitinoff-aktiven Wasserstoffatomen weisen meist Funktionalitäten von 2 bis 8 auf. Die Starterverbindungen können hydroxyfunktionell und / oder aminofunktionell sein. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Beispiele für aminofunktionelle Starterverbindungen sind Ammoniak, Ethanolamin, Diethanolamin, Triethanolamin, Isopropanolamin, Diisopropanolamin, Ethylendiamin, Hexamethylendiamin, Anilin, die Isomere des Toluidins, die Isomere des Diaminotoluols, die Isomere des Diaminodiphenylmethans und bei der Kondensation von Anilin mit Formaldehyd zu Diaminodiphenylmethan anfallende höherkernige Produkte.

Geeignete Alkylenoxide für die konventionellen Polyetherpolyole sind beispielsweise Ethylenoxid, Propylenoxid, 1,2-Butylenoxid bzw. 2,3-Butylenoxid und Styroloxid. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Produkte mit Ethylenoxidendblöcken sind beispielsweise durch erhöhte Konzentrationen an primären Endgruppen gekennzeichnet, welche den Systemen eine vorteilhafte Isocyanatreaktivität verleihen.

Die Herstellung der konventionellen Polyetherpolyole kann basenkatalysiert, beispielsweise über Alkalimetallhydroxid- oder Aminkatalyse, doppelmetallcyanidkatalysiert oder Lewis- bzw. Brønsted-säurekatalysiert erfolgen.

Neben den vorgenannten konventionellen Polyetherpolyolen können für die Herstellung der Polyurethanpolymere, bevorzugt der Polyurethan-Weichschaumstoffe, besonders bevorzugt der Polyurethan-Weichblockschaumstoffe oder der Polyurethan-Weichformschaumstoffe, zusätzlich oder alternativ auch Polyesterpolyole verwendet werden. Geeignete Polyesterpolyole weisen vorzugsweise OH-Zahlen im Bereich von 6 bis 800 mg KOH/g auf und können beispielsweise aus mehrfunktionellen Carbonsäuren, vorzugsweise organischen Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen nach bekannten Verfahren hergestellt werden. Anstelle der mehrfunktionellen Carbonsäuren können auch deren Derivate, wie z. B. Säurechloride oder -anhydride eingesetzt werden.

In einer ersten Ausführungsform betrifft die Erfindung somit ein Verfahren zur Herstellung von Polyethercarbonatpolyolen durch Anlagerung von Alkylenoxiden und Kohlendioxid an H-funktionelle Starterverbindungen, dadurch gekennzeichnet, dass mindestens ein Alkohol, der mindestens zwei Urethangruppen enthält, als H-funktionelle Starterverbindung eingesetzt wird.

In einer zweiten Ausführungsform betrifft die Erfindung ein Verfahren gemäß der ersten Ausführungsform, dadurch gekennzeichnet, dass mindestens ein Alkohol, der zwei Urethangruppen enthält, als H-funktionelle Starterverbindung eingesetzt wird.

In einer dritten Ausführungsform betrifft die Erfindung ein Verfahren gemäß der zweiten Ausführungsform, dadurch gekennzeichnet, dass mindestens ein Alkohol, der zwei Urethangruppen enthält, gemäß Formel (II) als H-funktionelle Starterverbindung eingesetzt wird,

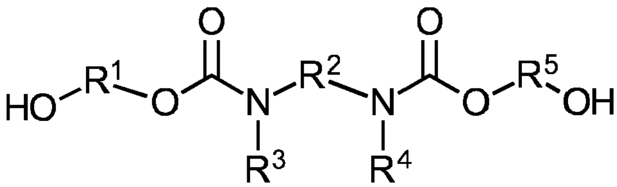

(II)

wobei

$R^1$ bedeutet lineares oder verzweigtes $C_2$ bis $C_{24}$ - Alkylen, das gegebenenfalls durch Heteroatome wie O, S oder N unterbrochen sein kann und substituiert sein kann, bevorzugt $CH_2$-$CH_2$ oder $CH_2$-$CH(CH_3)$,

$R^2$ bedeutet lineares oder verzweigtes $C_2$ bis $C_{24}$ - Alkylen, $C_3$ bis $C_{24}$ - Cycloalkylen, $C_4$ bis $C_{24}$ - Arylen, $C_5$ bis $C_{24}$ - Aralkylen, $C_2$ bis $C_{24}$ - Alkenylen, $C_2$ bis $C_{24}$ - Alkinylen, die jeweils gegebenenfalls durch Heteroatome wie O, S oder N unterbrochen sein können und/oder jeweils mit Alkyl, Aryl und/oder Hydroxyl substituiert sein können, bevorzugt $C_2$ bis $C_{24}$ - Alkylen,

$R^3$ bedeutet H, lineares oder verzweigtes $C_1$ bis $C_{24}$ - Alkyl, $C_3$ bis $C_{24}$ - Cycloalkyl, $C_4$ bis $C_{24}$ - Aryl, $C_5$ bis $C_{24}$ - Aralkyl, $C_2$ bis $C_{24}$ - Alkenyl, $C_2$ bis $C_{24}$ - Alkinyl, die jeweils gegebenenfalls durch Heteroatome wie O, S oder N unterbrochen sein können und/oder jeweils mit Alkyl, Aryl und/oder Hydroxyl substituiert sein können, bevorzugt H,

$R^4$ bedeutet H, lineares oder verzweigtes $C_1$ bis $C_{24}$ - Alkyl, $C_3$ bis $C_{24}$ - Cycloalkyl, $C_4$ bis $C_{24}$ - Aryl, $C_5$ bis $C_{24}$ - Aralkyl, $C_2$ bis $C_{24}$ - Alkenyl, $C_2$ bis $C_{24}$ - Alkinyl, die jeweils gegebenenfalls durch Heteroatome wie O, S oder N unterbrochen sein können und/oder jeweils mit Alkyl, Aryl und/oder Hydroxyl substituiert sein können, bevorzugt H,

$R^5$ bedeutet lineares oder verzweigtes $C_2$ bis $C_{24}$ - Alkylen, das gegebenenfalls durch Heteroatome wie O, S oder N unterbrochen sein kann und substituiert sein kann, bevorzugt $CH_2$-$CH_2$ oder $CH_2$-$CH(CH_3)$, und wobei $R^1$ bis $R^5$ identisch oder voneinander verschieden sein können.

In einer vierten Ausführungsform betrifft die Erfindung ein Verfahren gemäß der dritten Ausführungsform, wobei

$R^1 = CH_2$-$CH_2$ oder $CH_2$-$CH(CH_3)$,

$R^2 = C_2$ bis $C_{24}$ - Alkylen,

$R^3 = R^4 = H$, und

$R^5 = CH_2$-$CH_2$ oder $CH_2$-$CH(CH_3)$ bedeuten.

In einer fünften Ausführungsform betrifft die Erfindung ein Verfahren gemäß einer der Ausführungsformen 1 bis 4, dadurch gekennzeichnet, dass der Alkohol, der mindestens zwei Urethangruppen enthält, erhältlich ist durch Umsetzung von cyclischen Carbonaten mit Verbindungen, die mindestens zwei Amino-Gruppen aufweisen.

In einer sechsten Ausführungsform betrifft die Erfindung ein Verfahren gemäß einer der Ausführungsformen 1 bis 5, dadurch gekennzeichnet, dass der Alkohol, der mindestens zwei Urethangruppen enthält, erhältlich ist durch Umsetzung von Propylencarbonat und/oder Ethylencarbonat mit Verbindungen, die mindestens zwei Amino-Gruppen aufweisen.

In einer siebten Ausführungsform betrifft die Erfindung ein Verfahren gemäß einer der Ausführungsformen 1 bis 6, dadurch gekennzeichnet, dass der Alkohol, der zwei Urethangruppen enthält, erhältlich ist durch Umsetzung von Propylencarbonat und/oder Ethylencarbonat mit Diaminen gemäß Formel (III),

$$HN(R^3)\text{-}R^2\text{-}NH(R^4) \qquad \text{(III)}$$

wobei $R^2$ bis $R^4$ identisch oder voneinander verschieden sein können und die in Ansprüchen 3 bis 4 genannte Bedeutung haben.

In einer achten Ausführungsform betrifft die Erfindung ein Verfahren gemäß einer der Ausführungsformen 1 bis 7, dadurch gekennzeichnet, dass der Alkohol, der zwei Urethangruppen enthält, erhältlich ist durch Umsetzung von Propylencarbonat und/oder Ethylencarbonat mit mindestens einer Verbindung ausgewählt aus der Gruppe bestehend aus 1,2-Ethandiamin, Diaminopropan, Diaminopentan, Diaminohexan, Diaminooctan, Diaminodecan, Diaminododecan, Diaminooctadecan, Diaminoeicosan, Isophorondiamin, Toluylendiamin, und Methylendianilin.

In einer neunten Ausführungsform betrifft die Erfindung ein Verfahren gemäß einer der Ausführungsformen 1 bis 8, dadurch gekennzeichnet, dass als Alkylenoxid wenigstens ein Alkylenoxid ausgewählt aus der Gruppe bestehend aus Ethylenoxid und Propylenoxid eingesetzt wird.

In einer zehnten Ausführungsform betrifft die Erfindung ein Verfahren gemäß einer der Ausführungsformen 1 bis 9, wobei die Anlagerung in Gegenwart mindestens eines DMC-Katalysators erfolgt.

In einer elften Ausführungsform betrifft die Erfindung ein Verfahren gemäß einer der Ausführungsformen 1 bis 9, wobei die Anlagerung in Gegenwart eines Metallkomplexkatalysators auf Basis der Metalle Zink und/oder Cobalt erfolgt.

In einer zwölften Ausführungsform betrifft die Erfindung ein Verfahren gemäß einer der Ausführungsformen 1 bis 10, dadurch gekennzeichnet, dass

($\alpha$) der Alkohol, der mindestens zwei Urethangruppen enthält, gemäß Formel (II) oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei DMC-Katalysator dem Urethan-Alkohol gemäß Formel (II) oder dem Suspensionsmittel vor oder nach der Trocknung zugesetzt wird,

($\beta$) zur Aktivierung eine Teilmenge (bezogen auf die Gesamtmenge der bei der Aktivierung und Copolymerisation eingesetzten Menge an Alkylenoxiden) von Alkylenoxid zu der aus Schritt ($\alpha$) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,

($\gamma$) Alkylenoxid, Kohlendioxid und gegebenenfalls Urethan-Alkohol gemäß Formel (II) zu der aus Schritt ($\beta$) resultierenden Mischung zugesetzt werden,

wobei wenigstens in einem der Schritte ($\alpha$) oder ($\gamma$) mindestens ein Urethan-Alkohol gemäß Formel (II) als H-funktionelle

Startersubstanz zugesetzt wird.

In einer dreizehnten Ausführungsform betrifft die Erfindung ein Verfahren gemäß einer der Ausführungsformen 1 bis 12, wobei ein oder mehrere der Urethan-Alkohole der Formel (II) als H-funktionelle Startersubstanz(en) während der Reaktion kontinuierlich in den Reaktor zudosiert werden.

In einer vierzehnten Ausführungsform betrifft die Erfindung ein Verfahren gemäß einer der Ausführungsformen 1 bis 10 und 12 bis 13, wobei ein oder mehrere Urethan-Alkohole gemäß Formel (II), ein oder mehrere Alkylenoxid(e) sowie DMC-Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird.

In einer fünfzehnten Ausführungsform betrifft die Erfindung ein Verfahren gemäß Ausführungsform 14, wobei in einem Schritt ($\delta$) das kontinuierlich aus dem Reaktor entfernte Reaktionsgemisch mit einem Gehalt von 0,05 Gew.-% bis 10 Gew.-% Alkylenoxid in einen Nachreaktor überführt wird, in dem im Wege einer Nachreaktion der Gehalt an freiem Alkylenoxid auf weniger als 0,05 Gew.-% im Reaktionsgemisch reduziert wird.

In einer sechzehnten Ausführungsform betrifft die Erfindung Polyethercarbonatpolyole enthaltend eine Struktureinheit der Formel (IV),

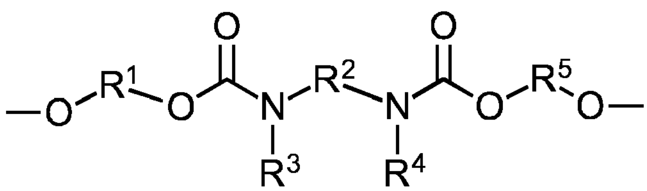

(IV)

wobei $R^1$ bis $R^5$ identisch oder voneinander verschieden sein können und die in Ansprüchen 3 bis 4 genannte Bedeutung haben.

In einer siebzehnten Ausführungsform betrifft die Erfindung Polyethercarbonatpolyole erhältlich nach einem Verfahren gemäß einem der Ausführungsformen 1 bis 15.

In einer achtzehnten Ausführungsform betrifft die Erfindung Polyethercarbonatpolyole gemäß Ausführungsform 16 oder 17, dadurch gekennzeichnet, dass diese eine OH-Zahl von 3 mg KOH/g bis 400 mg KOH/g, bevorzugt von 10 mg KOH/g bis 200 mg KOH/g, besonders bevorzugt von 20 mg KOH/g bis 150 mg KOH/g, aufweisen.

In einer neunzehnten Ausführungsform betrifft die Erfindung die Verwendung eines Polyethercarbonatpolyols gemäß einer der Ausführungsformen 16 bis 18 zur Herstellung eines Polyurethanpolymers, bevorzugt eines Polyurethan-Weichschaums, besonders bevorzugt eines Polyurethan-Weichblockschaumstoffs oder eines Polyurethan-Weichformschaumstoffs.

In einer zwanzigsten Ausführungsform betrifft die Erfindung ein Polyurethanpolymer, bevorzugt einen Polyurethan-Weichschaum, besonders bevorzugt eines Polyurethan-Weichblockschaumstoffs oder eines Polyurethan-Weichformschaumstoffs erhältlich durch Umsetzung eines Polyisocyanats mit einem Polyethercarbonatpolyol gemäß einem der Ausführungsformen 16 bis 18.

## Beispiele:

### Messmethoden:

Experimentell ermittelte OH-Zahlen wurden gemäß der Vorschrift der DIN 53240 bestimmt.

Die Aminzahlen (NH-Zahl) wurden gemäß der Vorschrift der DIN 53176 ermittelt.

Die Viskositäten wurden mittels Rotationsviskosimeter (Physica MCR 51, Hersteller: Anton Paar) nach der Vorschrift der DIN 53018 ermittelt.

Der Anteil an eingebautem $CO_2$ im resultierenden Polyethercarbonatpolyol ($CO_2$-Gehalt) sowie das Verhältnis von Propylencarbonat zu Polyethercarbonatpolyol wurden mittels $^1$H-NMR (Firma Bruker, DPX 400, 400 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:

cyclisches Carbonat (welches als Nebenprodukt gebildet wurde) Resonanz bei 4,5 ppm, Carbonat, resultierend aus im Polyethercarbonatpolyol eingebautem Kohlendioxid (Resonanzen bei 5,1 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm.

Der Molenanteil des im Polymer eingebauten Carbonats in der Reaktionsmischung wird nach Formel (XII) wie

folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol

Unter Berücksichtigung der relativen Intensitäten wurde gemäß der folgenden Formel (XII) für das polymer gebundene Carbonat ("lineares Carbonat" LC) in der Reaktionsmischung in mol% umgerechnet:

$$\mathrm{L}C = \frac{F(5{,}1-4{,}8)-F(4{,}5)}{\mathrm{F}(5{,}1-4{,}8)+\mathrm{F}(2{,}4)+0{,}33*\mathrm{F}(1{,}2-1{,}0)} * 100 \qquad \text{(XII)}$$

Der Gewichtsanteil (in Gew.-%) polymer-gebundenen Carbonats (LC') in der Reaktionsmischung wurde nach Formel (XIII) berechnet,

$$LC' = \frac{\left[F(5{,}1-4{,}8)-F(4{,}5)\right]*102}{N} * 100\% \qquad \text{(XIII)}$$

wobei sich der Wert für N ("Nenner" N) nach Formel (XIV) berechnet:

$$\mathrm{N} = \left[\mathrm{F}(5{,}1-4{,}8)-\mathrm{F}(4{,}5)\right]*102+\mathrm{F}(4{,}5)*102+\mathrm{F}(2{,}4)*58+0{,}33*\mathrm{F}(1{,}2-1{,}0)*58 \qquad \text{(XIV)}$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid.

Der Gewichtsanteil (in Gew.-%) an cyclischem Carbonat (CC') in der Reaktionsmischung wurde nach Formel (XV) berechnet,

$$CC' = \frac{F(4{,}5)*102}{N} * 100\% \qquad \text{(XV)}$$

wobei sich der Wert für N nach Formel (XIV) berechnet.

Um aus den Werten der Zusammensetzung der Reaktionsmischung die Zusammensetzung bezogen auf den Polymer-Anteil (bestehend aus Polyether, welcher aus Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ("eingebautes $CO_2$"; siehe nachfolgende Beispiele) ist normiert auf das Polyethercarbonatpolyol-Molekül, das bei der Copolymerisation und den Aktivierungsschritten entstanden ist.

Die Menge an gebildeten cyclischen Propylencarbonat wird über die Bilanzierung der in der Reaktionsmischung vorhandenen Gesamtmenge an cyclischem Propylencarbonat und der als Vorlage eingesetzten Menge an Propylencarbonat bestimmt.

Die Rohdichten und Stauchhärten (40% Kompression, 4. Zyklus) wurden gemäß DIN EN ISO 3386-1 ermittelt.

**<u>Eingesetzte Rohstoffe:</u>**

Katalysator für die Herstellung der Polyethercarbonatpolyole (DMC-Katalysator): Doppelmetallcyanid-Katalysator, enthaltend Zinkhexacyanocobaltat, tert.-Butanol und Polypropylenglykol mit einem zahlenmittleren Molekulargewicht von 1000 g/mol; gemäß Beispiel 6 in WO-A 01/80994.

Cyclisches Propylencarbonat (cPC): Fa. Acros.
1,3-Diaminopropan, Fa. Sigma-Aldrich
1,5-Diaminopentan, Fa. Sigma-Aldrich
Polyol B-1: trifunktionelles Polyetherpolyol auf Basis Glycerin mit Hydroxylzahl 48 mg KOH/g, erhalten durch Copolymerisation von 12 Gew.-% Ethylenoxid mit 88 Gew.-% Propylenoxid
Stabilisator 1: Siloxan-basierter Schaumstabilisator Tegostab® BF 2370, Evonik Goldschmidt
Isocyanat 1: Gemisch aus 80 Gewichts-% 2,4- und 20 Gewichts-% 2,6-Toluylendiisocyanat, erhältlich unter dem Namen Desmodur® T 80, Bayer MaterialScience AG
Katalysator 1: Bis-(2-dimethylamino-ethyl)-ether in Dipropylenglykol, erhältlich als Addocat® 108, Fa. Rheinchemie
Katalysator 2: Zinn(II)-ethylhexanoat, erhältlich als Dabco® T-9, Fa. Air Products

Herstellung von Diurethan-Diolen:

Die in den Beispielen 1 und 2 hergestellten erfindungsgemäßen Alkohole enthalten zwei Hydroxylgruppen und zwei Urethangruppen, und werden daher als Diurethan-Diole bezeichnet.

**Beispiel 1:**

In einem 2L-Vierhalskolben mit Rückflusskühler und Thermometer wurde cyclisches Propylencarbonat (919 g, 9 mol) vorgelegt. Anschließend wurde bei 60°C 1,3-Diaminopropan (222 g, 3 mol) langsam zu getropft. Die Reaktion wurde anschließend für insgesamt 24 h bei 60°C nachgerührt. Nach Abkühlen auf 25°C wurde das Diurethan-Diol erhalten.

Produkteigenschaften des resultierenden Diurethan-Diols:

| | |
|---|---|
| OH-Zahl: | 295 mg KOH/g |
| NH-Zahl: | 0,8 mg KOH/g |
| Viskosität (25°C): | 2000 mPas |

**Beispiel 2:**

In einem 2L-Vierhalskolben mit Rückflusskühler und Thermometer wurde cyclisches Propylencarbonat (766 g, 7,5 mol) vorgelegt. Anschließend wurde bei 60°C 1,5-Diaminopentan (255 g, 2,5 mol) langsam zu getropft. Die Reaktion wurde anschließend für insgesamt 24 h bei 60°C nachgerührt. Nach Abkühlen auf 25°C wurde das Diurethan-Diol erhalten.

Produkteigenschaften des resultierenden Diurethan-Diols:

| | |
|---|---|
| OH-Zahl: | 278 mg KOH/g |
| NH-Zahl: | 0,9 mg KOH/g |
| Viskosität (25°C): | 2100 mPas |

Herstellung von Polyethercarbonatpolyolen:

**Beispiel 3 (Copolymerisation von PO und $CO_2$ mit kontinuierlicher Dosierung der Diurethan-Diol Starterverbindung):**

Schritt ($\alpha$) ("Trocknung"):

664 mg getrockneter DMC-Katalysator, der nicht aktiviert ist, wurden in 102 g 4-Methyl-2-oxo-1,3-dioxolan (im Folgenden auch als cyclisches Propylencarbonat oder cPC bezeichnet) suspendiert und die Suspension anschließend in einen 2L Druckreaktor mit Gasdosierungseinrichtung gefüllt. Die Suspension wurde dann auf 130 °C aufgeheizt und über 30 min wurde ~30 L/h Stickstoff eingeleitet, wobei gleichzeitig ein reduzierter Druck von 75-100 mbar angelegt wurde.

Schritt ($\beta$) ("Katalysatoraktivierung"):

In dem Reaktor wurden bei 130 °C, 1200 U/min und bei einem Vordruck von rund 100 mbar, der mit Stickstoff

eingestellt wurde, eine Menge von 20 g Propylenoxid (PO) auf einmal zugegeben. Das Anspringen der Reaktion machte sich durch eine Temperaturspitze ("Hotspot") und durch einen Druckabfall auf den Ausgangsdruck bemerkbar. Nach dem ersten Druckabfall wurde der Reaktor mit p = 50 bar $CO_2$ beaufschlagt und anschließend wurden zur Aktivierung weitere 20 g PO auf einmal zugegeben. Nach einer Wartezeit kam es erneut zu einer Temperaturspitze und der Gesamtdruck im Reaktor zeigte erneut eine Druckabnahme.

Schritt ($\gamma$) ("Copolymerisation von PO und $CO_2$ mit kontinuierlicher Dosierung der Diurethan-Diol Starterverbindung"):

Nach Schritt ($\beta$) wurden Propylenoxid (974,9 g) mit 4,10 g/min und 374,5 g des Diurethan-Diols aus Beispiel 1 (versetzt mit 172 mg $H_3PO_4$) mit 1,77 g/min bei 105°C simultan in den Reaktor eindosiert. Der Fortschritt der Reaktion wurde an dem $CO_2$-Verbrauch beobachtet, wobei durch kontinuierliche geregelte Nachdosierung der Druck im Reaktor bei 50 bar $CO_2$ konstant gehalten wurde. Nach beendeter PO-Zugabe wurde bei 105°C und Reaktionsdruck bis zum Versiegen des $CO_2$-Verbrauchs nachgerührt (1200 U/min). Diese Nachreaktion dauerte ca. 3 h.

Das erhaltene Produktgemisch wurde mittels Rotationsverdampfer von Spuren monomerem Propylenoxid befreit und durch die Zugabe von 500 ppm Irganox 1076 stabilisiert. Anschließend wurde das cyclische Propylencarbonat mittels Dünnschichtverdampfung (0,1 mbar, 120 °C) aus der Reaktionsmischung abgetrennt. Der im Polyethercarbonatpolyol eingebaute $CO_2$-Anteil, die Viskosität und die OH-Zahl wurden mit den oben genannten analytischen Methoden bestimmt.

Eigenschaften des resultierenden Polyethercarbonatpolyols:

| | |
|---|---|
| OH-Zahl: | 93 mg KOH/g |
| Viskosität (25°C): | 3965 mPas |
| $CO_2$-Gehalt: | 8,6% |

**Beispiel 4: Copolymerisation von PO und $CO_2$ mit kontinuierlicher Dosierung der Diurethan-Diol Starterverbindung**

Schritt ($\alpha$) ("Trocknung"):

517 mg getrockneter DMC-Katalysator, der nicht aktiviert ist, wurden in 102 g 4-Methyl-2-oxo-1,3-dioxolan (im Folgenden auch als cyclisches Propylencarbonat oder cPC bezeichnet) suspendiert und die Suspension anschließend in einen 2L Druckreaktor mit Gasdosierungseinrichtung gefüllt. Die Suspension wurde dann auf 130 °C aufgeheizt und über 30 min wurde 30 L/h Stickstoff eingeleitet, wobei gleichzeitig ein reduzierter Druck von 75 mbar angelegt wurde.

Schritt ($\beta$) ("Katalysatoraktivierung"):

In dem Reaktor wurden bei 130 °C, 1200 U/min und bei einem Vordruck von rund 100 mbar, der mit Stickstoff eingestellt wurde, eine Menge von 20 g Propylenoxid (PO) auf einmal zugegeben. Das Anspringen der Reaktion machte sich durch eine Temperaturspitze ("Hotspot") und durch einen Druckabfall auf den Ausgangsdruck bemerkbar. Nach dem ersten Druckabfall wurde der Reaktor mit p = 50 bar $CO_2$ beaufschlagt und anschließend wurden zur Aktivierung weitere 20 g PO auf einmal zugegeben. Nach einer Wartezeit kam es erneut zu einer Temperaturspitze und der Gesamtdruck im Reaktor zeigte erneut eine Druckabnahme.

Schritt ($\gamma$) ("Copolymerisation von PO und $CO_2$ mit kontinuierlicher Dosierung der Diurethan-Diol Starterverbindung"):

Nach Schritt ($\beta$) wurden Propylenoxid (596,9 g) mit 2 g/min und 234 g des Diurethan-Diols aus Beispiel 2 (versetzt mit 107 mg $H_3PO_4$) mit 0,88 g/min bei 105°C simultan in den Reaktor eindosiert. Der Fortschritt der Reaktion wurde an dem $CO_2$-Verbrauch beobachtet, wobei durch kontinuierliche geregelte Nachdosierung der Druck im Reaktor bei 50 bar $CO_2$ konstant gehalten wurde. Nach beendeter PO-Zugabe wurde bei 105°C und Reaktionsdruck bis zum Versiegen des $CO_2$-Verbrauchs nachgerührt (1200 U/min). Diese Nachreaktion dauerte ca. 3 h.

Das erhaltene Produktgemisch wurde mittels Rotationsverdampfer von Spuren monomerem Propylenoxid befreit und durch die Zugabe von 500 ppm Irganox 1076 stabilisiert. Anschließend wurde das cyclische Propylencarbonat mittels Dünnschichtverdampfung (0,1 mbar, 120 °C) aus der Reaktionsmischung abgetrennt. Der im Polyethercarbonatpolyol eingebaute $CO_2$-Anteil, die Viskosität und die OH-Zahl wurden mit den oben genannten analytischen Methoden bestimmt.

Eigenschaften des resultierenden Polyethercarbonatpolyols:

| | |
|---|---|
| OH-Zahl: | 86,2 mg KOH/g |
| Viskosität (25°C): | 5450 mPas |
| $CO_2$-Gehalt: | 9,4% |

Herstellung von Polyurethan-Weichschaumstoffen:

**Beispiele 5 und 6**

In für die Herstellung von Polyurethanschaumstoffen üblicher Verarbeitungsweise nach dem Einstufenverfahren wurden die in den Beispielen der in der nachfolgenden Tabelle 1 aufgeführten Einsatzstoffe miteinander zur Reaktion gebracht.

Es wurden Polyurethan-Weichschaumstoffe gemäß der in der nachfolgenden Tabelle 1 angegebenen Rezeptur hergestellt, wobei u.a. Polyethercarbonatpolyole aus den Beispielen 3 und 4 in der Polyol-Komponente eingesetzt wurden. Aufgeführt sind die Anteile der Komponenten in Gewichts-Teilen.

Es wurden qualitativ hochwertige Polyurethan-Weichschaumstoffe mit einheitlicher Zellstruktur erhalten, die durch Ermittlung der Rohdichten und Stauchhärten (Stauchhärte gemessen bei 40% Kompression) charakterisiert wurden (Tabelle 1). Beispiele 5 und 6 belegen somit, dass die erfindungsgemäßen Polyetherpolyole für die Herstellung von Polyurethanen (hier: Polyurethan-Weichschaumstoffen) geeignet sind.

Tabelle 1: Herstellung von Polyurethan-Weichschaumstoffen

| **Beispiel** | **5** | **6** |
|---|---|---|
| Polyol B-1 | 50 | 50 |
| Polyethercarbonatpolyol aus Beispiel 3 | 50 | - |
| Polyethercarbonatpolyol aus Beispiel 4 | - | 50 |
| Stabilisator 1 | 1,20 | 1,20 |
| Katalysator 1 | 0,12 | 0,12 |
| Katalysator 2 | 0,18 | 0,18 |
| Wasser | 4,50 | 4,50 |
| Isocyanat 1 | 58,8 | 58,2 |
| NCO-Index | 108 | 108 |
| Rohdichte [kg/m$^3$] | 23,1 | 23,2 |
| Stauchhärte, 4. Zyklus [kPa] | 5,9 | 7,6 |

## Patentansprüche

1. Verfahren zur Herstellung von Polyethercarbonatpolyolen durch Anlagerung von Alkylenoxiden und Kohlendioxid an H-funktionelle Starterverbindungen, **dadurch gekennzeichnet, dass** mindestens ein Alkohol, der mindestens zwei Urethangruppen enthält, als H-funktionelle Starterverbindung eingesetzt wird.

2. Verfahren gemäß Anspruch 1, **dadurch gekennzeichnet, dass** mindestens ein Alkohol, der zwei Urethangruppen enthält, als H-funktionelle Starterverbindung eingesetzt wird.

3. Verfahren gemäß Anspruch 2, **dadurch gekennzeichnet, dass** mindestens ein Alkohol, der zwei Urethangruppen enthält, gemäß Formel (II) als H-funktionelle Starterverbindung eingesetzt wird,

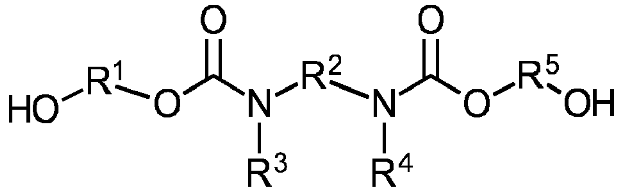

(II)

wobei
$R^1$ bedeutet lineares oder verzweigtes $C_2$ bis $C_{24}$ - Alkylen, das gegebenenfalls durch Heteroatome wie O, S oder N unterbrochen sein kann und substituiert sein kann, $R^2$ bedeutet lineares oder verzweigtes $C_2$ bis $C_{24}$ - Alkylen, $C_3$ bis $C_{24}$ - Cycloalkylen, $C_4$ bis $C_{24}$ - Arylen, $C_5$ bis $C_{24}$ - Aralkylen, $C_2$ bis $C_{24}$ - Alkenylen, $C_2$ bis $C_{24}$ - Alkinylen, die jeweils gegebenenfalls durch Heteroatome wie O, S oder N unterbrochen sein können und/oder jeweils mit Alkyl, Aryl und/oder Hydroxyl substituiert sein können,
$R^3$ bedeutet H, lineares oder verzweigtes $C_1$ bis $C_{24}$ - Alkyl, $C_3$ bis $C_{24}$ - Cycloalkyl, $C_4$ bis $C_{24}$ - Aryl, $C_5$ bis $C_{24}$ - Aralkyl, $C_2$ bis $C_{24}$ - Alkenyl, $C_2$ bis $C_{24}$ - Alkinyl, die jeweils gegebenenfalls durch Heteroatome wie O, S oder N unterbrochen sein können und/oder jeweils mit Alkyl, Aryl und/oder Hydroxyl substituiert sein können,
$R^4$ bedeutet H, lineares oder verzweigtes $C_1$ bis $C_{24}$ - Alkyl, $C_3$ bis $C_{24}$ - Cycloalkyl, $C_4$ bis $C_{24}$ - Aryl, $C_5$ bis $C_{24}$ - Aralkyl, $C_2$ bis $C_{24}$ - Alkenyl, $C_2$ bis $C_{24}$ - Alkinyl, die jeweils gegebenenfalls durch Heteroatome wie O, S oder N unterbrochen sein können und/oder jeweils mit Alkyl, Aryl und/oder Hydroxyl substituiert sein können,
$R^5$ bedeutet lineares oder verzweigtes $C_2$ bis $C_{24}$ - Alkylen, das gegebenenfalls durch Heteroatome wie O, S oder N unterbrochen sein kann und substituiert sein kann,
und wobei $R^1$ bis $R^5$ identisch oder voneinander verschieden sein können.

4. Verfahren gemäß Anspruch 3, wobei
$R^1 = CH_2\text{-}CH_2$ oder $CH_2\text{-}CH(CH_3)$,
$R^2 = C_2$ bis $C_{24}$ - Alkylen,
$R^3 = R^4 = H$, und
$R^5 = CH_2\text{-}CH_2$ oder $CH_2\text{-}CH(CH_3)$ bedeuten.

5. Verfahren gemäß einem der Ansprüche 1 bis 4, **dadurch gekennzeichnet, dass** der Alkohol, der mindestens zwei Urethangruppen enthält, erhältlich ist durch Umsetzung von Propylencarbonat und/oder Ethylencarbonat mit Verbindungen, die mindestens zwei Amino-Gruppen aufweisen.

6. Verfahren gemäß einem der Ansprüche 1 bis 5, **dadurch gekennzeichnet, dass** der Alkohol, der zwei Urethangruppen enthält, erhältlich ist durch Umsetzung von Propylencarbonat und/oder Ethylencarbonat mit Diaminen gemäß Formel (III),

$$HN(R^3)\text{-}R^2\text{-}NH(R^4) \qquad \text{(III)}$$

wobei $R^2$ bis $R^4$ identisch oder voneinander verschieden sein können und die in Ansprüchen 3 bis 4 genannte Bedeutung haben.

7. Verfahren gemäß einem der Ansprüche 1 bis 6, **dadurch gekennzeichnet, dass** der Alkohol, der zwei Urethangruppen enthält, erhältlich ist durch Umsetzung von Propylencarbonat und/oder Ethylencarbonat mit mindestens einer Verbindung ausgewählt aus der Gruppe bestehend aus 1,2-Ethandiamin, Diaminopropan, Diaminopentan, Diaminohexan, Diaminooctan, Diaminodecan, Diaminododecan, Diaminooctadecan, Diaminoeicosan, Isophorondiamin, Toluylendiamin, und Methylendianilin.

8. Verfahren gemäß einem der Ansprüche 1 bis 7, wobei die Anlagerung in Gegenwart mindestens eines DMC-Katalysators erfolgt.

9. Verfahren gemäß einem der Ansprüche 1 bis 7, wobei die Anlagerung in Gegenwart eines Metallkomplexkatalysators auf Basis der Metalle Zink und/oder Cobalt erfolgt.

10. Verfahren gemäß einem der Ansprüche 1 bis 8, **dadurch gekennzeichnet, dass**
(α) der Alkohol, der mindestens zwei Urethangruppen enthält, gemäß Formel (II) oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei DMC-Katalysator dem Urethan-Alkohol gemäß Formel (II) oder dem Suspensionsmittel vor oder nach der Trocknung zugesetzt wird,
(β) zur Aktivierung eine Teilmenge (bezogen auf die Gesamtmenge der bei der Aktivierung und Copolymerisation eingesetzten Menge an Alkylenoxiden) von Alkylenoxid zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,
(γ) Alkylenoxid, Kohlendioxid und gegebenenfalls Urethan-Alkohol gemäß Formel (II) zu der aus Schritt (β) resultierenden Mischung zugesetzt werden,
wobei wenigstens in einem der Schritte (α) oder (γ) mindestens ein Urethan-Alkohol gemäß Formel (II) als H-funktionelle Startersubstanz zugesetzt wird.

**11.** Verfahren gemäß einem der Ansprüche 1 bis 10, wobei ein oder mehrere der Urethan-Alkohole der Formel (II) als H-funktionelle Startersubstanz(en) während der Reaktion kontinuierlich in den Reaktor zudosiert werden.

**12.** Verfahren gemäß einem der Ansprüche 1 bis 8 und 10 bis 11, wobei ein oder mehrere Urethan-Alkohole gemäß Formel (II), ein oder mehrere Alkylenoxid(e) sowie DMC-Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird.

**13.** Polyethercarbonatpolyole enthaltend eine Struktureinheit der Formel (IV),

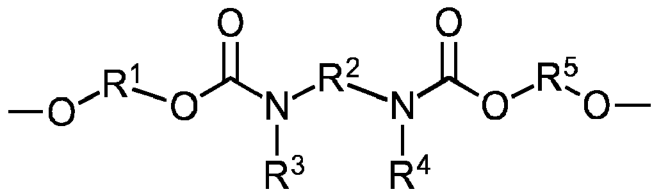

(IV)

wobei $R^1$ bis $R^5$ identisch oder voneinander verschieden sein können und die in Ansprüchen 3 bis 4 genannte Bedeutung haben.

**14.** Polyethercarbonatpolyole erhältlich nach einem Verfahren gemäß einem der Ansprüche 1 bis 12.

**15.** Polyurethanpolymer, bevorzugt ein Polyurethan-Weichschaum, erhältlich durch Umsetzung eines Polyisocyanats mit einem Polyethercarbonatpolyol gemäß Anspruch 13 oder 14.

Europäisches Patentamt
European Patent Office
Office européen des brevets

# EUROPÄISCHER RECHERCHENBERICHT

Nummer der Anmeldung
EP 15 16 9223

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 219 655 A1 (UBE INDUSTRIES [JP]) 3. Juli 2002 (2002-07-03) * Beispiele 7-11 * ----- | 13-15 | INV. C08G65/26 |
| X | EP 1 700 877 A1 (BAYER MATERIALSCIENCE AG [DE]) 13. September 2006 (2006-09-13) * Beispiel 5 * ----- | 13-15 | |
| E | EP 2 886 572 A1 (BAYER MATERIALSCIENCE AG [DE]) 24. Juni 2015 (2015-06-24) * das ganze Dokument * ----- | 1-15 | |
| A | WO 2012/004209 A1 (BAYER MATERIALSCIENCE AG [DE]; WAMPRECHT CHRISTIAN [DE]; GUERTLER CHRI) 12. Januar 2012 (2012-01-12) * Seite 4, Zeile 18 - Zeile 28; Ansprüche 1,5 * ----- | 1-15 | |
| A | WO 2008/092767 A1 (BASF SE [DE]; MIJOLOVIC DARIJO [DE]; KUMMETER MARKUS [DE]; STOESSER MI) 7. August 2008 (2008-08-07) * Seite 2, Zeile 16 - Zeile 19 * * Seite 5, Zeile 34 - Zeile 35 * * Seite 16, Zeile 30 - Zeile 33 * * Anspruch 1 * ----- | 1-15 | RECHERCHIERTE SACHGEBIETE (IPC): C08G |
| A | US 2012/215020 A1 (RAETHER ROMAN BENEDIKT [DE] ET AL) 23. August 2012 (2012-08-23) * Absätze [0034] - [0041], [0053], [0064], [0078]; Verbindung IV * ----- | 1-7 | |
| A | EP 0 228 037 A2 (DOW CHEMICAL CO [US]) 8. Juli 1987 (1987-07-08) * Spalte 3, Zeile 37 - Spalte 5, Zeile 32 * ----- | 1-15 | |
| | -/-- | | |

Der vorliegende Recherchenbericht wurde für alle Patentansprüche erstellt

2

| Recherchenort | Abschlußdatum der Recherche | Prüfer |
|---|---|---|
| Den Haag | 3. August 2015 | Hoffmann, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 15 16 9223

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | JP 2006 063103 A (KEIO GIJUKU) 9. März 2006 (2006-03-09) * Zusammenfassung * | 6,7 | |
| A | JOHN H CLEMENTS: "Reactive applications of cyclic alkylene carbonates", INDUSTRIAL & ENGINEERING CHEMISTRY RESEARCH, AMERICAN CHEMICAL SOCIETY, US , Bd. 42, Nr. 4 19. Februar 2003 (2003-02-19), Seiten 663-674, XP002721719, ISSN: 0888-5885, DOI: 10.1021/IE020678I Gefunden im Internet: URL:http://www.huntsman.com/performance_products/Media%20Library/a_MC348531CFA3EA9A2E040EBCD2B6B7B06/Products_MC348531D0B9FA9A2E040EBCD2B6B7B06/Carbonates_MC348531D1109A9A2E040EBCD2B6B7B06/files/reactive_applications_of_cyclic_alkylene_carbonates.pdf [gefunden am 2003-01-18] * Verbindung 16 * | 3 | |
| | | | RECHERCHIERTE SACHGEBIETE (IPC) |

Der vorliegende Recherchenbericht wurde für alle Patentansprüche erstellt

2

| Recherchenort | Abschlußdatum der Recherche | Prüfer |
|---|---|---|
| Den Haag | 3. August 2015 | Hoffmann, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 15 16 9223

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-08-2015

| Im Recherchenbericht angeführtes Patentdokument | Datum der Veröffentlichung | Mitglied(er) der Patentfamilie | Datum der Veröffentlichung |
|---|---|---|---|
| EP 1219655 A1 | 03-07-2002 | DE 60102209 D1 | 08-04-2004 |
| | | DE 60102209 T2 | 03-02-2005 |
| | | EP 1219655 A1 | 03-07-2002 |
| | | ES 2217084 T3 | 01-11-2004 |
| | | US 2002123595 A1 | 05-09-2002 |
| | | US 2005143551 A1 | 30-06-2005 |
| EP 1700877 A1 | 13-09-2006 | BR PI0600766 A | 07-11-2006 |
| | | CA 2538652 A1 | 12-09-2006 |
| | | CN 1847278 A | 18-10-2006 |
| | | DE 102005011448 A1 | 21-09-2006 |
| | | EP 1700877 A1 | 13-09-2006 |
| | | JP 2006249434 A | 21-09-2006 |
| | | KR 20060100201 A | 20-09-2006 |
| | | MX PA06002675 A | 11-09-2006 |
| | | US 2006205912 A1 | 14-09-2006 |
| EP 2886572 A1 | 24-06-2015 | EP 2886572 A1 | 24-06-2015 |
| | | WO 2015091246 A1 | 25-06-2015 |
| WO 2012004209 A1 | 12-01-2012 | CA 2804134 A1 | 12-01-2012 |
| | | CN 103097425 A | 08-05-2013 |
| | | EP 2591036 A1 | 15-05-2013 |
| | | ES 2463967 T3 | 29-05-2014 |
| | | JP 2013537565 A | 03-10-2013 |
| | | KR 20130089642 A | 12-08-2013 |
| | | SG 186833 A1 | 28-02-2013 |
| | | US 2013150526 A1 | 13-06-2013 |
| | | WO 2012004209 A1 | 12-01-2012 |
| WO 2008092767 A1 | 07-08-2008 | AT 493457 T | 15-01-2011 |
| | | CN 101611074 A | 23-12-2009 |
| | | EP 2115032 A1 | 11-11-2009 |
| | | ES 2358861 T3 | 16-05-2011 |
| | | JP 5512283 B2 | 04-06-2014 |
| | | JP 2010516796 A | 20-05-2010 |
| | | KR 20090107555 A | 13-10-2009 |
| | | PT 2115032 E | 01-02-2011 |
| | | US 2010048935 A1 | 25-02-2010 |
| | | WO 2008092767 A1 | 07-08-2008 |
| US 2012215020 A1 | 23-08-2012 | KEINE | |
| EP 0228037 A2 | 08-07-1987 | AU 595847 B2 | 12-04-1990 |
| | | AU 6688786 A | 02-07-1987 |
| | | BR 8606476 A | 20-10-1987 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR. EP 15 16 9223

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-08-2015

| Im Recherchenbericht angeführtes Patentdokument | Datum der Veröffentlichung | Mitglied(er) der Patentfamilie | Datum der Veröffentlichung |
|---|---|---|---|
| | | CA 1268288 A1 | 24-04-1990 |
| | | EP 0228037 A2 | 08-07-1987 |
| | | JP S62181331 A | 08-08-1987 |
| | | US 4686276 A | 11-08-1987 |
| JP 2006063103 A | 09-03-2006 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0222453 A
- WO 2003029325 A
- WO 2008092767 A
- US 3829505 A
- DE 1595759
- US 3654224 A
- EP 1359177 A
- US 3404109 A
- US 3941849 A
- US 5158922 A
- US 5470813 A
- EP 0700949 A
- EP 0743093 A
- EP 0761708 A
- WO 9740086 A
- WO 9816310 A
- WO 0047649 A
- WO 2011144523 A
- JP 4145123 A
- WO 0139883 A
- WO 0180994 A
- US 4987271 A
- DE 3132258 A
- EP 0406440 A
- US 5391722 A
- US 5099075 A
- US 4721818 A
- US 4877906 A
- EP 0385619 A
- US 3538043 A
- US 4500704 A
- US 5032671 A
- US 6646100 A
- WO 2008013731 A
- US 7304172 B2
- US 20120165549 A1
- EP 0007502 A1


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- **M. H. CHISHOLM et al.** *Macromolecules,* 2002, vol. 35, 6494
- **S. D. ALLEN.** *J. Am. Chem. Soc.,* 2002, vol. 124, 14284
- **M. R. KEMBER et al.** *Angew. Chem., Int. Ed.,* 2009, vol. 48, 931
- **VON W. SIEFKEN.** Justus Liebigs Annalen der Chemie. vol. 562, 75-136